# EUROPEAN PATENT SPECIFICATION

(11) **EP 1 388 119 B1**
(45) Date of publication and mention of the grant of the patent: **02.07.2008**
(21) Application number: 02735128.7
(22) Date of filing: 13.03.2002
(51) Int. Cl.: G06F 3/048, G06K 11/00

(54) **TRACKBALL FOR CONTROLLING CURSOR MOVEMENT ON A SCREEN**
TRACKBALL ZUR STEUERUNG DER CURSORBEWEGUNG AUF EINEM BILDSCHIRM
BOULE DE COMMANDE PERMETTANT DE DIRIGER LE MOUVEMENT DU CURSEUR SUR UN ECRAN

(30) Priority: 16.03.2001 FR 0103579
(43) Date of publication of application: 11.02.2004
(73) Proprietor: ITT Manufacturing Enterprises, Inc., Wilmington, Delaware 19801 (US)
(72) Inventor: BRICAUD, Hervé, F-39100 Dole (FR); FERRATON, David, F-39100 Crissey (FR)
(74) Representative: Kohn, Philippe
(86) International application number: PCT/EP2002/002778
(87) International publication number: WO 2002/075641

(56) References cited:
- EP-A- 1 073 004
- DE-U- 9 419 148
- US-A- 5 926 167

## Description

The present invention relates to a control device of the type commonly referred to as a "trackball", or trackball user input device, in which a ball partially extends through a hole of the housing.

The invention thus relates to a control device of the type comprising a housing in which are arranged two orthogonal revolving coding shafts driven in rotation, each in both directions, by a trackball mounted rotatably in the housing, and of the type in which each shaft is tied in rotation to a mobile element belonging to a generator of control signals, in particular for the displacement of a cursor over a screen of an electronic apparatus.

Numerous exemplary embodiments of such a type of device, applied in particular to the control of a cursor of a so-called portable computer, are known.

There are various designs for the driving of the shafts by the ball, in particular by friction or by magnetic coupling. An example is disclosed in EP-A-1.073.004.

Various designs have also been proposed for each signal generator which are for example of the type with wiper-contact coding wheel, of the electro-optical type or of the electromagnetic type.

The choice between the various designs of drive and of signal generators makes allowance in particular for the accuracy desired, for reliability and for the possibilities of integration as a function of the electronic apparatus with which the control device is associated. The electrical consumption of the device in its standby state or rest state is also an important parameter of this choice insofar as it may be particularly high in the case of electro-optical coding systems.

The overall dimensions of the control device and its possibilities of connection or of electrical linking are determining factors as regards its adaptation to certain types of electronic apparatuses of restricted dimensions.

The requirement of a control device making it possible to displace a cursor over a screen, and/or to scroll menus, also referred to as a "navigator", is moreover important in apparatuses of the "portable telephone" type offering ever more functions and services calling in particular upon choices offered on one or more screens, in a manner similar to the use of a portable computer. It is moreover desirable to be able to employ at least one entry button which the user presses in order to enter a choice corresponding to the position that the cursor has reached on the screen by manipulation of the ball. Moreover; the planned increase in the dimension of the screens, of the order of 40 by 80 mm, makes it necessary to employ a very effective navigator making it possible in particular to move accurately in all directions, and not only in the conventional two orthogonal directions of investigation.

This requirement is for example illustrated by the document US-A-5.901.222 (LUCENT TECHNOLOGIES) which proposes a portable and ergonomic telecommunications apparatus whose interface with the user consists only of one or more screens and of a single device of "trackball" type whose ball can be pushed or depressed so as to enter a position of a cursor or a choice from a menu, in the absence of any keyboard and of any other switch(es) control button.

The document DE-A-4.107.085 has also proposed a control device which is associated with a lower entry switch on which the user acts by depressing the ball and by way of a bead interposed between the ball and the triggering member of the switch.

The invention aims to propose an enhanced design of a control device of the "trackball" type mentioned above which is of extremely restricted dimensions and cost, while possessing an ergonomic and reliable design, allowing easy integration thereof into a portable telecommunications apparatus, in particular as regards the linking of its various electrical outputs.

For this purpose, the invention proposes a device, characterized in that the generator of control signals comprises :
- a mobile contact rod which, in its rest position towards which it is elastically restored, lies along a substantially vertical direction in which a lower span of the rod is received with play between two fixed and opposed contact lugs of vertical orientation, and which is mounted tilting globally about a horizontal axis parallel to the axis of the associated shaft;
- and a toothed pinion, tied in rotation to the associated shaft, between two consecutive teeth of which is received an upper span of the mobile contact rod in the rest position, in such a way as to cause the tilting of the contact rod, in one direction or the other, when the shaft is driven in rotation so as to establish electrical contact between the lower span and one or other of the two fixed contact lugs, and to cause the automatic escapement of the upper span from the space delimited by the two consecutive teeth beyond a specified angle of rotation of the shaft.

According to other characteristics of the invention :
- the tilting axis is situated vertically between the lower span and upper span of the mobile contact rod;
- the mobile contact rod is tied in rotation to the last turn of one end of a torsion spring, made of metallic wire, of horizontal axis whose cylindrical body is accommodated in the housing whose other end is rotationally locked;
- the lower span is the lower free end span of the mobile contact rod;
- the upper span is a 180° bent span which joins the mobile contact rod to the last turn of the spring;
- the bent span lies in a vertical plane parallel to the axis of the spring and substantially tangential to the periphery of the body of the spring;
- the horizontal axis of the spring is offset transversely with respect to the axis of the associated coding shaft;
- the contact rod is made in one piece with the spring;
- the housing comprises a lower part, open vertically towards the top, in the bottom of which are arranged the fixed contact lugs and which comprises recesses open towards the top, which accommodate spans of each coding shaft for its rotational mounting in the housing, and recesses, of semi cylindrical overall shape, which accommodate the cylindrical body of each spring;
- the device comprises an electric switch, in particular for entering a position of the cursor on the screen, of the type comprising at least two fixed contact lugs arranged in the bottom of the housing and a triggering member of arched general shape which is elastically deformable, from a rest position, under the action of a vertically oriented load applied to the ball (30), so as to establish an electrical link between the two fixed contact lugs;
- the triggering member comprises a central part which delimits a cavity in the form of a hollow spherical cap which directly receives a part of the trackball;
- the fixed contact lugs of the electric switch and the fixed contact lugs of the signal generators are conducting contact lugs belonging to the upper face of one end of a flat cable received in the bottom of the lower part of the housing;
- the spring is a spiral spring and the first turn of the spiral spring is extended vertically downwards via a linking strand, and the upper face of the flat cable comprises an additional fixed contact lug with which the said linking strands are in electrical contact;
- the centre of rotation of the trackball is situated below the plane which contains the axes of rotation of the coding shafts;
- each coding shaft is driven in rotation by the ball by friction;
- at rest, the triggering member elastically urges the trackball upwards in contact with the coding shafts and bearing on a solid abutment offset upwards with respect to the centre of the trackball ;
- means is provided for illuminating the trackball;
- said illumination means is comprised of at least one light source arranged inside the body of the device for directly or indirectly illuminating the surface of the trackball;
- the housing comprises a lower part, open vertically towards the top, in the bottom of which are arranged the fixed contact lugs, and in the bottom of which at least one light source, is arranged;
- said triggering member comprises several radial branches, and said light source is arranged between two consecutive radial branches;
- said illumination means is comprised of at least one coloured light emitting diode;
- the device comprises means for wiping the surface of the trackball;
- said wiping means includes a wiping washer, lodged in a cavity of an upper part of the device and which permanently cooperates with the surface of the trackball;
- said wiping means is in the form of disposable means;
- the outside surface of the trackball is made of a material having a surface tension which is lower than a predetermined value;
- the surface tension is lower than 32 milliNewton by meter (32mN/m).

Other characteristics and advantages of the invention will become apparent on reading the detailed description which follows for the understanding of which reference may be made to the appended drawings, in which :
- Figure 1 is a plan and three-quarter front right external perspective view, which represents a control device in accordance with the teachings of the invention with its connection "flex";
- Figure 2 is an exploded perspective view on a larger scale of the various components of the device of Figure 1;

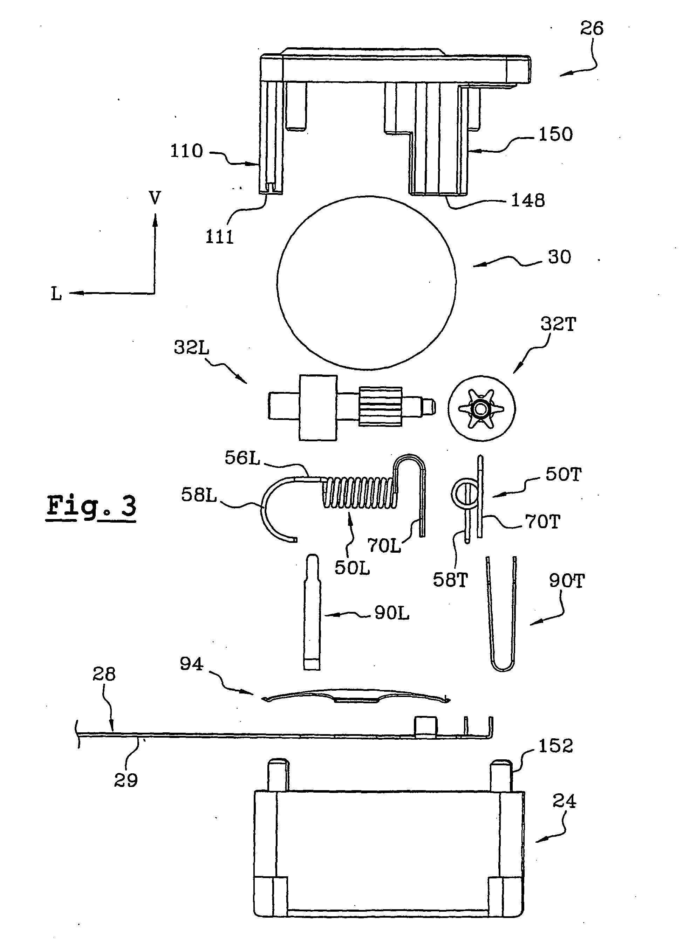

- Figure 3 is a transverse cross-sectional view of the components of Figure 2;
- Figure 4 is a plan view on a large scale of the lower part of the housing of the device of Figures 1 to 3;

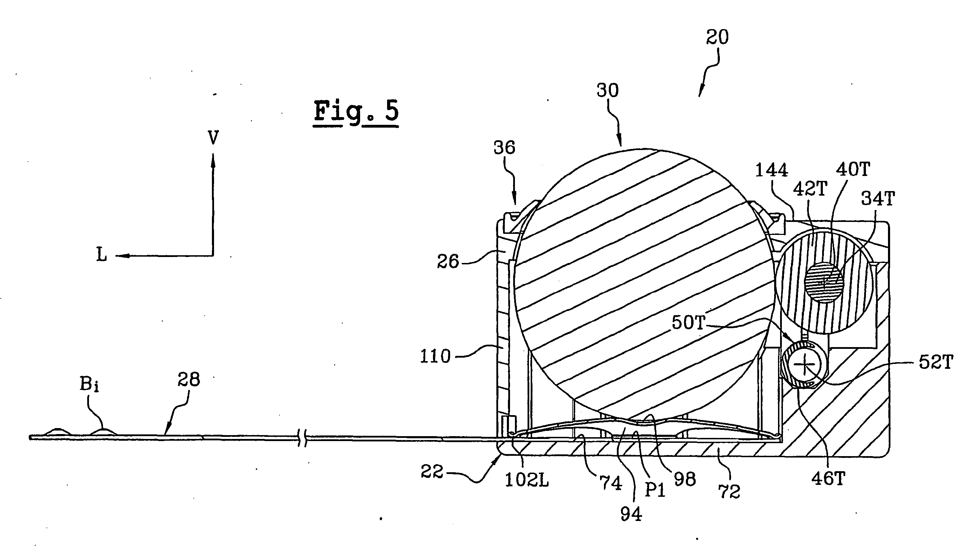

- Figures 5 to 8A and 9 are sectional views of the device according to the invention, through the vertical sectional planes 5-5 to 9-9 indicated in Figure 4 and in which the contact rods are represented in their stable vertical rest position;
- Figures 8B and 8C are views similar to that of Figure 8A and in which the contact rod is represented in two opposed contact positions;
- Figure 10 is a plan and three-quarter rear right perspective view on a large scale of the lower part of the housing;
- Figure 11 is a perspective view from below and on a large scale of the cover-forming upper part of the housing;
- Figure 12 is a view along the arrow F12 of Figure 11;
- Figure 13 is a perspective view on a large scale, from another angle, which illustrates the arrangement and the relative cooperation of the longitudinal coding shaft with the upper span of the associated mobile contact rod;
- Figure 14 is a perspective view on a large scale of the transverse spring;
- Figure 15 is a perspective plan view on a large scale of the triggering member of the entry switch;

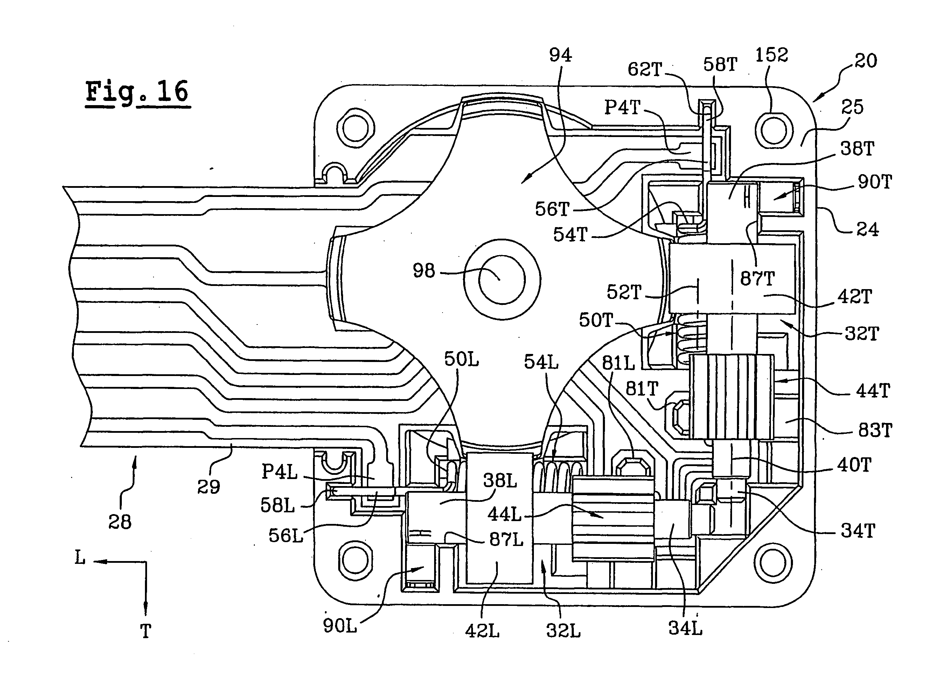

- Figure 16 is a plan view similar to that of Figure 4 with the set of components in the position mounted in the lower part of the housing, except for the trackball;
- Figure 17 is a plan view on a large scale which illustrates the various conducting contact lugs of the end span of the "flex" which is received in the bottom of the housing;

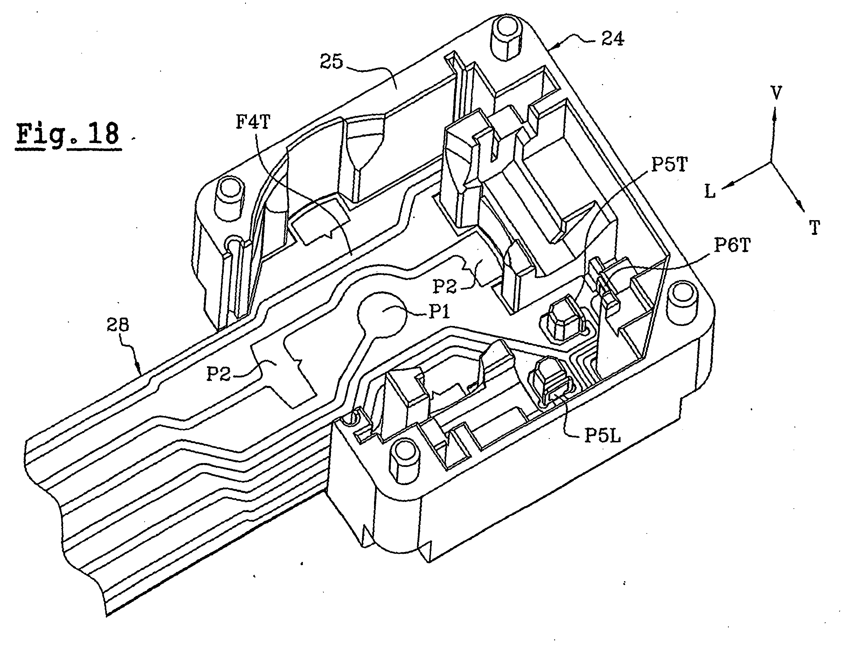

- Figure 18 is a view similar to that of Figure 10 which illustrates the placement of the linking "flex" in the lower part of the housing;

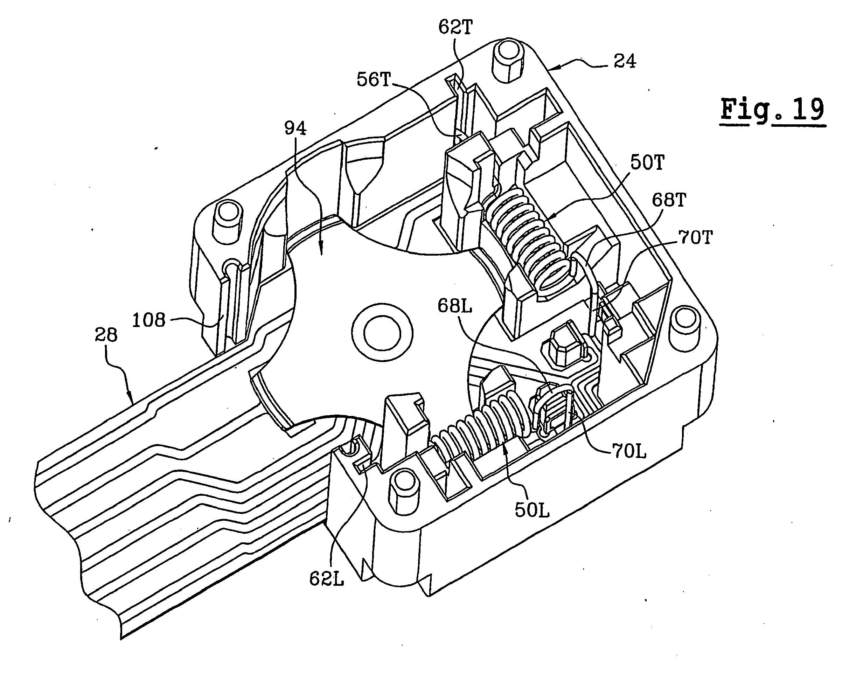

- Figure 19 is a view similar to that of Figure 18 after the placement of the contact springs and rods, and of the triggering member of the entry switch;

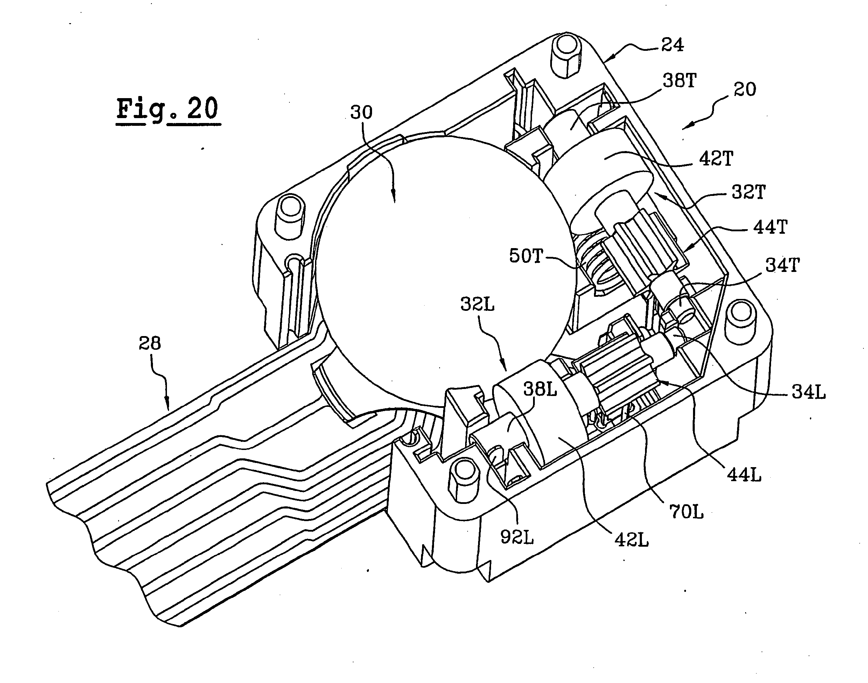

- Figure 20 is a view similar to those of Figures 18 and 19 with all the components in place and before closure of the housing by means of the upper cover;
- Figure 21 is a perspective view similar to that of Figure 1 which illustrates a variant embodiment of the invention in which the linking "flex" is replaced by connection tabs around which the lower part of the housing is overmoulded;
- Figure 22 is a view similar to that of Figure 4 which illustrates the lower part of the housing of the device of Figure 21 ;
- Figure 23 is a view similar to the one of figure 4 of a variant of the lower part of the housing for receiving the variant of the contact spring and rod illustrated in figure 25 ;
- Figure 24 is a view similar to the one of figure 12 of the variant of the housing of figure 23 ;
- Figure 25 is a front elevation view illustrating a variant of the contact spring and rod which is symmetric and therefore common, independently of its position in the lower part of the housing ;
- Figure 26 is a view similar to the one of figure 16 with the two contact springs and rods according to the variant of figure 25 ;
- Figure 27 is a view similar to the one of figure 26 without the coding shafts ;
- Figure 28 is a view similar to the one of figure 19 showing the arrangement of figure 27 ;
- Figure 29 is a view similar to the one of figure 20 showing the arrangement of figure 27 ;
- Figure 30 is a perspective view of a variant of the flex which supports two Light Emitting Diodes (LEDs) for illuminating the trackball according to a variant of the invention, the flex being shown without its upper cover lay ;
- Figure 31 is a view similar to the one of figure 30 with the flex illustrated with its upper cover lay ;

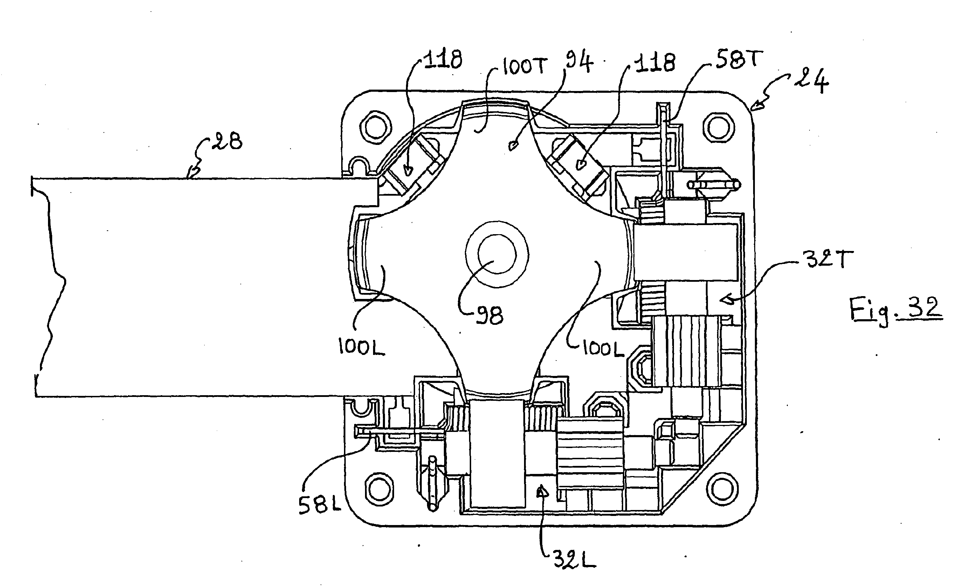

- Figure 32 is a view similar to the one of figure 16 of the variant with two LEDs ;

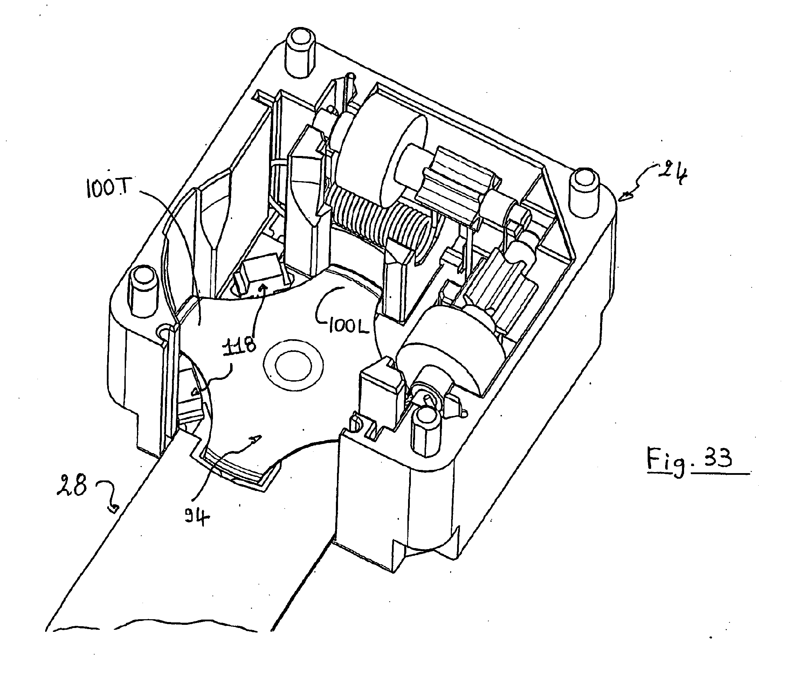

- Figure 33 is a perspective view of the arrangement of figure 32 ;

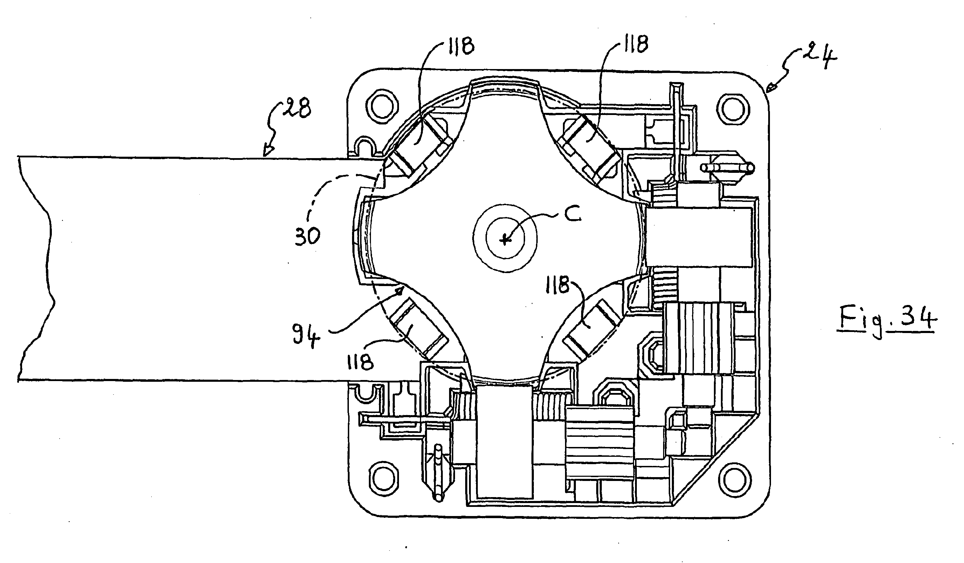

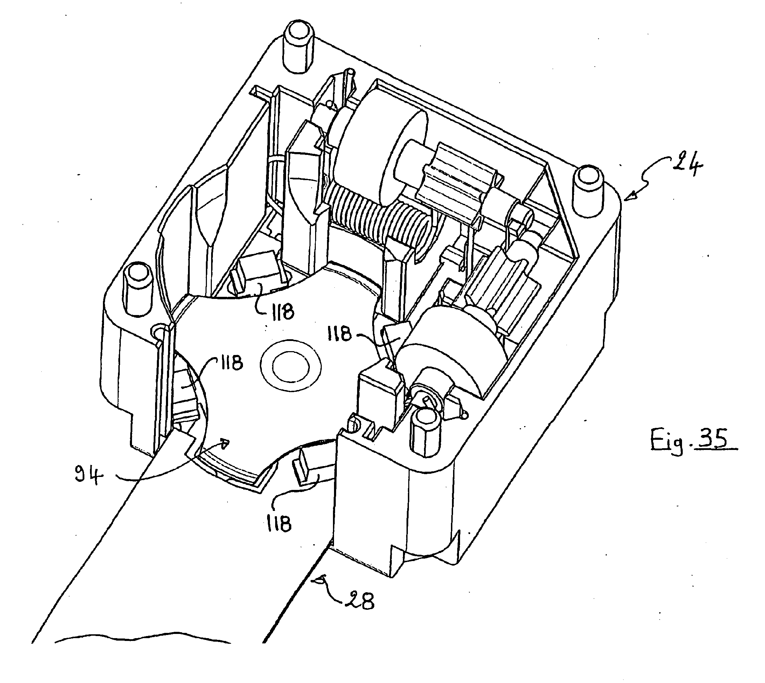

- Figures 34 and 35 are similar to figures 32 and 33 and show an arrangement with four LEDs ;
- Figure 36 is a sectional view through the vertical sectional plane passing by the centre of the trackball and the two diametrically opposed LEDs ;
- Figure 37 is a sectional view similar to the one of figure 7 showing a variant of the upper part of the housing incorporating means for wiping the trackball ;
- Figure 38 is an enlarged view of the detail D38 of figure 37 ;
- Figure 39 is an enlarged view of the right portion of the wiping means of figure 37 including a metal, cup shaped, annular casing, and an annular wiping element in form of a washer ;
- Figure 40 is an enlarged view of the left portion of the cup shaped metal casing of figure 39 ;
- Figure 41 is an enlarged view of the left portion of the annular wiping element ;
- Figures 42 and 43 show two variants of the wiping element ;
- Figure 44 is an enlarged view of the upper portion of the device according to the invention which is fixed under the lower face of an upper cover element belonging to the electronic apparatus equipped therewith ;
- Figure 45 is an enlarged view of the detail D45 of figure 44 ;
- Figure 46 is a sectional view showing means for fixing the trackball device under the said cover element ;
- Figure 47 is a perspective view of a frame with the various connecting tabs of a variant of a device of the type shown in figures 21 and 22 ;
- Figure 48 is an upper view of the tabs of figure 47 after the overmoulding of the corresponding lower part of the housing ;
- Figure 49 is a perspective view of the arrangement of figure 48 after the cutting out operations and the bending of the terminal contact tabs in a first example of "pressure contact tabs";
- Figure 50 is a view similar to the one of figure 49 with two LEDs ;
- Figure 51 is an outside perspective view of the final device including the lower part of figure 49 ;
- Figure 52 and 53 are views similar to the one of figure 51 which show two variants of the bent elastic pressure contact tabs.

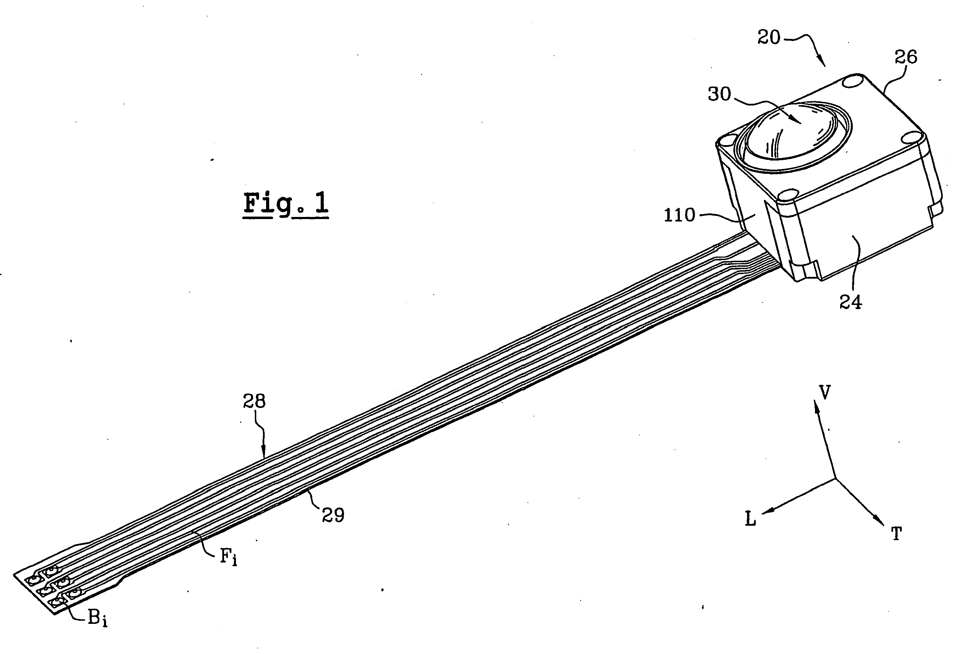

For the description of the invention, we shall in a nonlimiting manner adopt the vertical, longitudinal and transverse orientations according to the V, L, T reference frame indicated in Figure 1.

By convention, we shall also adopt the terms lower, upper, front, rear, and left, right with reference to Figure 1.

In the description which follows, identical, similar or analogous elements will be designated by the same numerical or alphanumerical references.

The device 20 comprises a housing 22 of substantially right-angled parallelepipedal general shape made of two parts, the main lower part 24 and the upper part 26 forming a cover for closing the lower part which accommodates the main components of the device 20.

The device essentially comprises a central control ball or sphere 30 which drives in rotation, here by friction, two orthogonal coding shafts, each of which is associated with a signal generator.

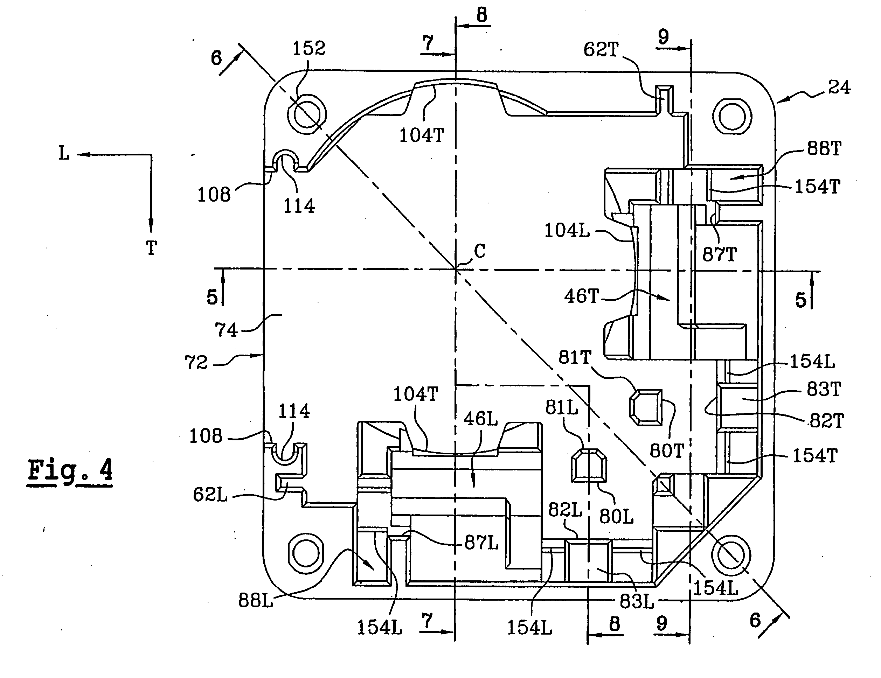

The two shafts and the signal generators are of overall symmetric design, and arranged symmetrically, with respect to a vertical plane of symmetry corresponding to the line 6-6 of Figure 4 and in which the centre C of the ball 30 lies.

Thus the identical, similar or analogous elements associated with the coding shaft of longitudinal axis and with the coding shaft of transverse axis will be designated by the same reference numerals indexed "L" and "T" respectively.

Each coding shaft 32L, 32T thus comprises a stepped cylindrical body 34L, 34T whose two opposite free ends 36L, 36T of small diameter and 38L, 38T of large diameter are mounted so as to rotate in both directions in the housing 22 about an axis 40L, 40T of rotation.

Each body 34L, 34T comprises a drive drum or roller 42L, 42T whose peripheral surface cooperates by friction with that of the ball 30, and a toothed coding pinion 44L, 44T, which are arranged axially along the body 34L, 34T to which they are tied in rotation.

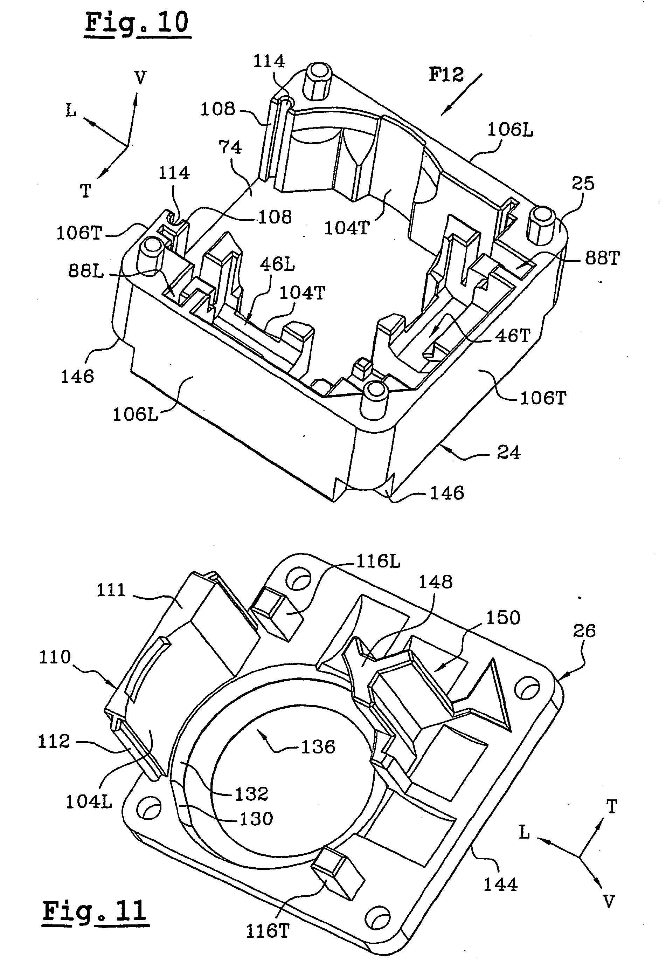

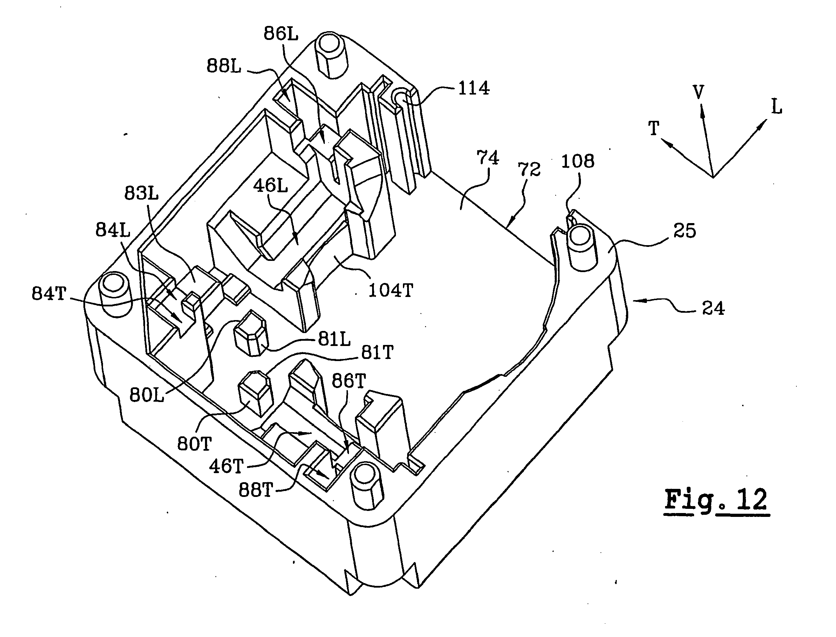

Beneath each coding shaft 32L, 32T, the lower part 24 of the housing 22 comprises a recess of semi cylindrical general shape 46L, 46T open towards the top (see Figures 10 and 12). More precisely, each recess exhibits a prismatic profile so as to limit the friction while ensuring guidance along linear ridges.

Each recess 46L, 46T receives the cylindrical main body 48L, 48T of a torsional spiral spring 50L, 50T made of metallic wire wound around an axis 52L, 52T.

The last turn 54L, 54T of each spring is extended by a strand 56L, 56T of axial orientation, along the axis 52L, 52T, which is itself extended by a free end strand 58L, 58T which is of semicircular shape extending downwards in a vertical plane in such a way as to be received vertically in a complementary slot 62L, 62T which is formed in the lower part 24 of the housing and open vertically towards the top.

The first turn 64L, 64T of the spring 50L, 50T, axially opposite the last turn 54L, 54T, is extended upwards by a vertical strand 66L, 66T which joins the first turn to a vertical mobile contact rod 70L, 70T by way of a 180° bent upper strand 68L, 68T.

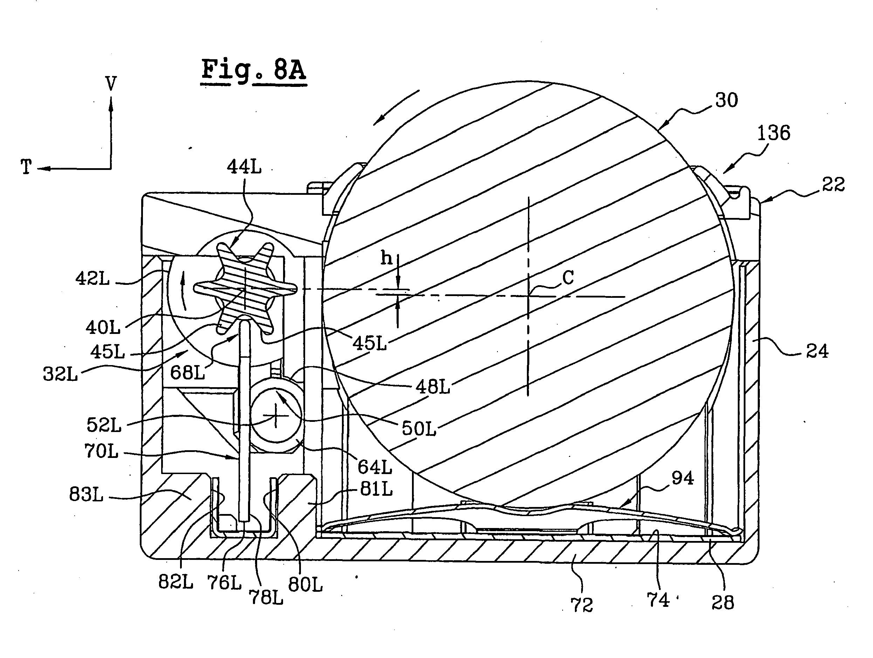

Thus, the shaping of this end of each spring is such that the joining strand 66L, 66T, the contact rod 70L, 70T and the bent strand 68L, 68T (which constitutes the upper end span of the contact rod) lie in a vertical plane substantially tangential to the periphery of the cylindrical body 48L, 48T of the spring 50L, 50T, as may be seen in particular in Figure 8A.

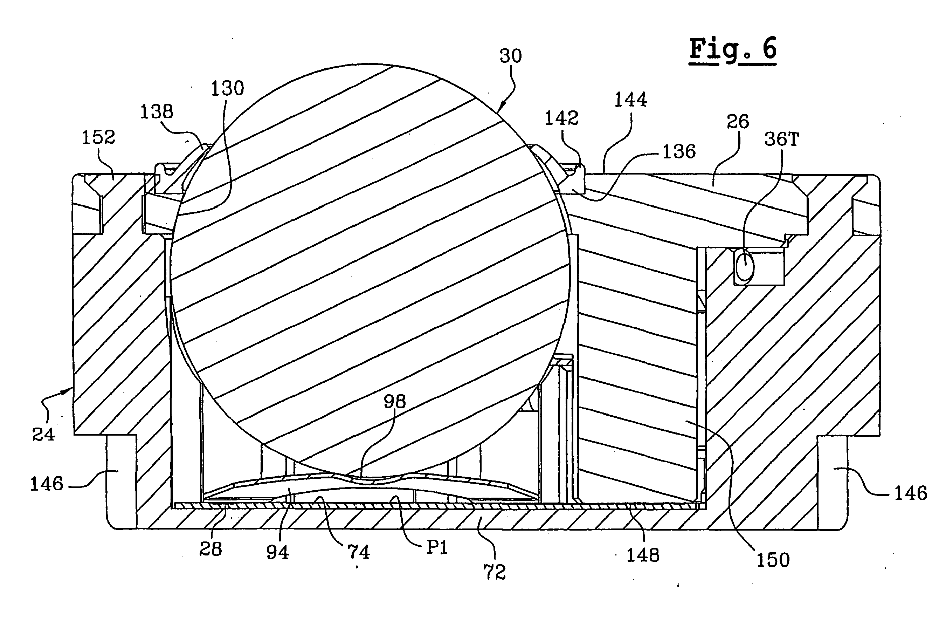

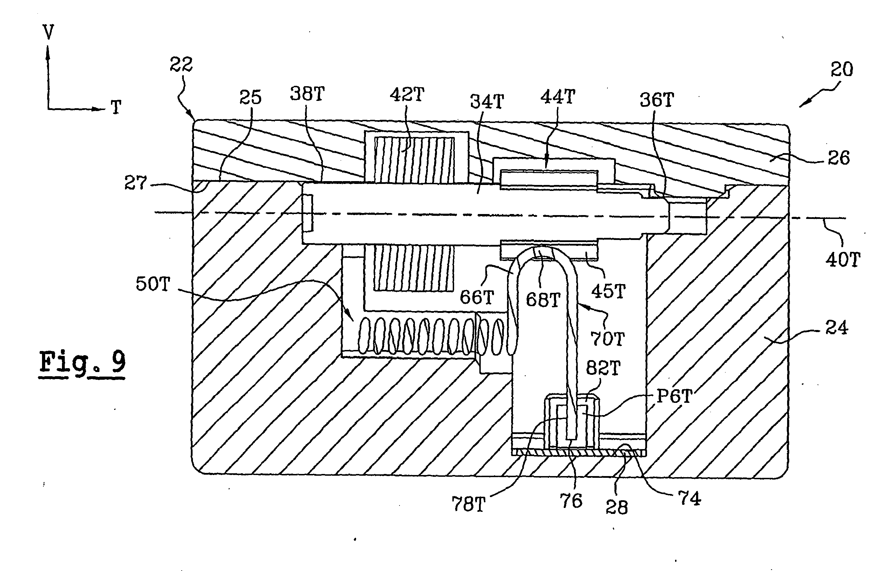

The vertical orientation of the contact rod 70L, 70T, in the rest position illustrated in particular in Figures 6 to 8A and 9, results from the design of each spring 50L, 50T with its contact rod 70L, 70T and its bent strand 58L, 58T, the latter being guided vertically in the slot 62L, 62T in such a way as to position the spring 50L, 50T angularly and to rotationally immobilize its end comprising the turn 54L, 54T.

The lower part 24 of the housing 22 is of hollow right-angled parallelepipedal general shape and it is delimited in particular by a bottom 72 with a horizontal plane upper face 74.

The height of each vertical contact rod 70L, 70T is such that the free end 76L, 76T of its lower contact span 78L, 78T extends with play above the portion overlooking the upper face 74.

Each lower contact span 78L, 78T is also received with lateral play between two vertical abutment surfaces 80L, 80T and 82L, 82T which belong to blocks of material 81L, 81T and 83L, 83T made integrally by moulding with the bottom 72 and which project vertically upwards.

As will be seen subsequently, when describing the manner of operation of the device 20, as a function of the rotation of the ball 30, each control rod 70L, 70T is capable of tilting with respect to its vertical position with a corresponding displacement of the lower contact span 78L, 78T towards the abutment faces 80L-82L, 80T-82T.

For the rotational mounting of each coding shaft 32L, 32T, the lower part 24 of the housing 22 comprises, in proximity to its horizontal upper face 25, recesses open vertically towards the top, 84L, 84T and 86L, 86T, which respectively receive the free ends 36L, 36T and 38L, 38T of the body 34L, 34T of each coding shaft 32L, 32T.

The horizontal width of the recesses 84L, 84T is substantially equal to the diameter of the end pivots 36L, 36T while the recesses 86L, 86T are open laterally towards the inside of the housing, each recess being supplemented with an elastic pin in the shape of a hairpin 90L, 90T which is mounted vertically in a complementary recess 88L, 88T in such a way that the free end upper branch 92L, 92T of the pin pointing towards the inside of the housing urges the corresponding pivot 38L, 38T elastically so as to push the roller 32L, 32T bearing against the ball 30.

In accordance with another aspect of the invention, the device 20 also comprises an entry switch which consists in essence of an elastic triggering member of the monostable type 94, of known general design in the shape of a star with four branches.

The triggering, dome shaped, member 94 comprises a central part 96 comprising a dish in the shape of a spherical cap 98 with its concavity oriented upwards on which the trackball 30 bears, and comprises two pairs of radial branches 100L, 100T, distributed at 90°, each of which terminates in a lower bearing and contact edge in the form of an arc of a circle 102L, 102T with its convexity oriented downwards.

The angular positioning of the triggering member 94 in the lower part 24 of the housing is ensured by means of the pair of recesses 104T which receive the two end edges 102T, and by means of a third recess 104L which receives one of the two end edges 102L, while the other edge 102L is received in a last recess 104L formed in the cover (see Figure 11).

As may be seen in particular in Figures 10 and 12, the lower part 24 of the housing 22 is delimited laterally by two parallel and opposite lateral walls 106L, left and right, and by a rear transverse wall 106T of transverse orientation, while the front transverse wall 106T comprises, over its entire height and as far as the upper face 74 of the bottom 72, an opening 108 whose function will be explained subsequently.

The cover 26 illustrated in particular in Figure 11 consists in essence of a horizontal board whose lower face 27 is designed to bear on the upper face 25 of the lower part 24.

The lower face 27 comprises cylindrical arc-shaped indentations to allow free passage and rotation of the rollers 42L, 42T and of the pinions 44L, 44T.

It also comprises two vertically downward-projecting fingers 116L and 116T which hold the strands 58L and 58T in place in their associated slot 62L, 62T, and bearing vertically downward against the facing lugs P4L and P4T of the flex as will be explained subsequently.

The cover 26 also comprises a vertical partition 110 complementary to the opening 108 of the lower part 24 which comprises, along its vertical edges, two ribs 112 complementary to the grooves 114 formed in the edges of the opening 108 in such a way as to allow the cover 26 to be mounted slidably, vertically downwards, on the lower part 24.

In the assembled position, and as will be seen for example in Figure 1, the cover 26 thus completes and fully closes the housing 22.

The height of the partition 110, delimited vertically towards the base by its horizontal edge 111, is slightly less than the height of the opening 108 in such a way as to allow the passage of the body 29 of the flex 28.

In the preferred embodiment of the device illustrated in the figures, the electrical linking of the control device 20 is ensured by means of a flat cord or cable 28, also known as a "flex", whose design and technology are known.

In all the figures, the upper face of the flex is represented without the insulating upper layer applied to the conducting tracks of the flex joining the lugs Pi and the terminals Bi. This layer, or "cover layer", makes it possible to guarantee electrical insulation between the tracks and to eliminate the risks of short-circuits during entry via deflection of the dome 94.

The flex 28 thus comprises a body in the shape of a band 29 of small thickness, of the order of 0.12 mm, inside which are made conducting wires or lines.

To join these wires Fi and constitute points of linking of the device 20, each of the wires terminates, at the front end, on the left when considering Figure 1, of the flex 28, in a linking terminal Bi which is formed on the upper face of the band 29 in the shape of an arched dome which exhibits an elastic deformation capability for its linking by contact pressure with a conducting track of a printed circuit board.

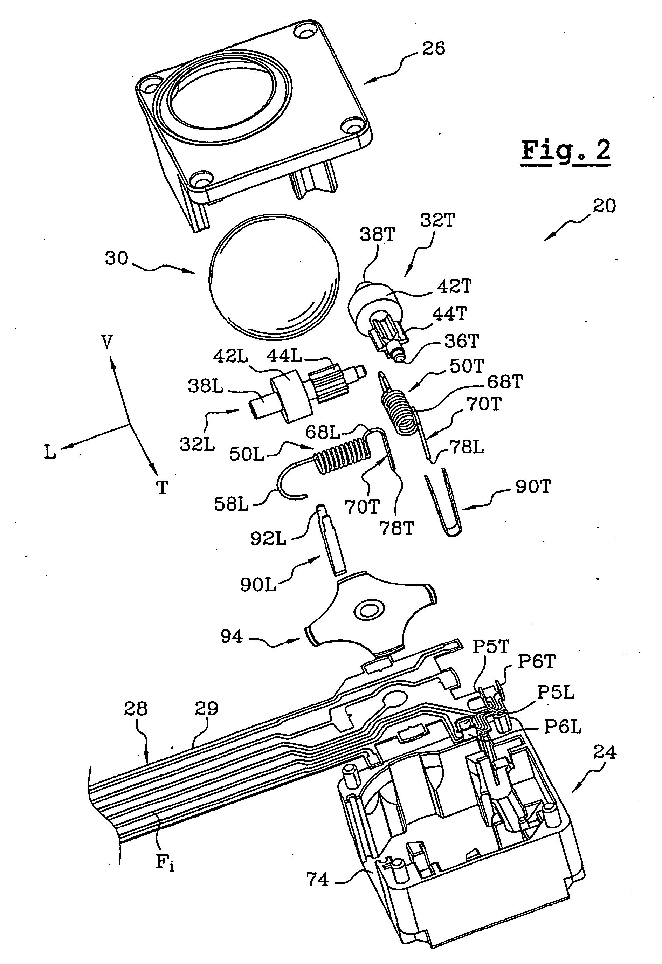

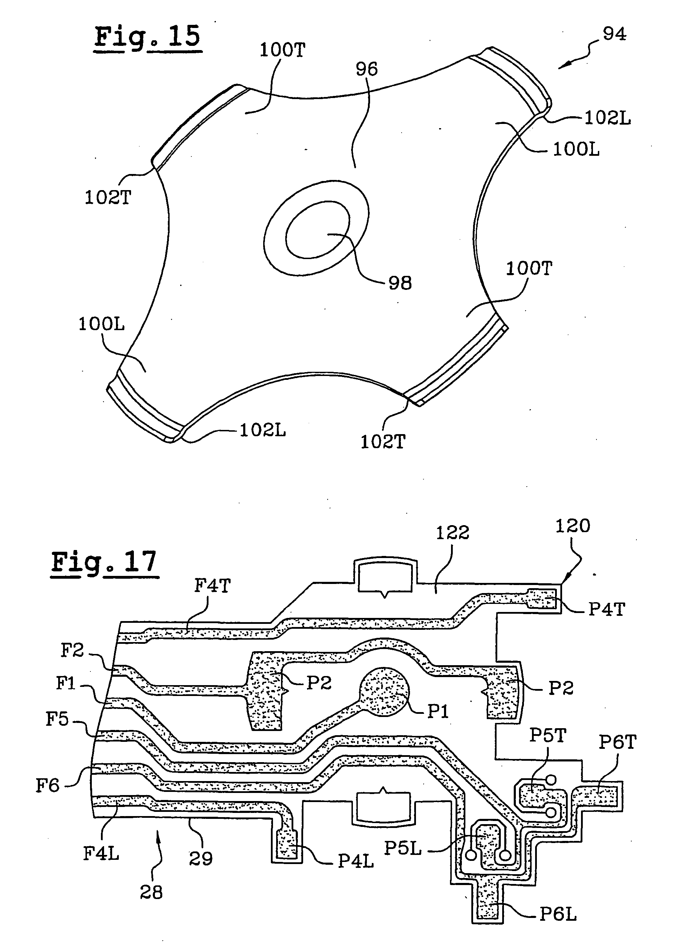

In the same manner and according to an advantageous characteristic of the invention, the rear free end span 120, on the right when considering for example Figures 2 and 17, comprises, made integrally, a series of conducting pads or lugs Pi joined to the wires Fi each of which constitutes a fixed contact intended to cooperate with the various active elements 70L, 70T, 60L, 60T and 94, 98 et 102L.

The contour of this rear span 120 exhibits a cutaway profile allowing its placement inside the lower part 24 so as to bear horizontally on the upper face 74 of the bottom 72.

To make the entry switch, in association with the triggering member 94, the upper face 122 of the rear span 120 comprises a central conducting lug P1 in the form of an inset, joined to a wire F1, which is situated vertically plumb with the central part 98, and two lugs P2, joined together and to a wire F2, which are situated longitudinally on either side of the central lug P1 and on each of which bears a lower contact edge 102L of the triggering member 94.

Conducting lugs are also provided for the transmission of the coding signals produced by the signal generators associated with the contact shafts 32L and 32T.

Thus, the body of each spring 50L, 50T is joined to a wire F4L, F4T, by way of a lug P4L, P4T, on which the free end 60L, 60T of the corresponding bent arm 58L, 58T bears elastically.

Thus, each mobile contact rod 70L, 70T is joined, via the body 48L, 48T of the spring 50L, 50T, to a conducting lug P4L, P4T, and hence to a corresponding wire F4L, F4T.

The lower contact span 78L, 78T of each mobile contact rod 70L, 70T is received between two opposite contact lugs P5L, P5T and P6L, P6T of vertical orientation which are made by cutting out from the span 120 of the flex 28 and which, after mounting, are stood upright in vertical planes while bearing against the vertical surfaces of corresponding abutments 80L, 80T and 82L, 82T.

By placing the span 120 of the flex 28 in position in the bottom 72, 74 of the lower part 24 of the housing 22, the various fixed contacts consisting of the conducting lugs Pi are made, while the part of the flex 28, 29 which exits the housing 22 via the opening 108 is pinched by the lower edge 111 of the partition 110.

This solution of linking with a span 120 of the flex 28 inside the housing is especially advantageous and economical.

Specifically, contrary to numerous known solutions, no soldering operation is necessary to link rigid linking tabs, which project from the housing, with conducting tracks of a printed circuit board or else with conducting lugs of a flex disposed under the component constituted by the device 20.

Moreover, the solution according to the invention allows especially easy and economical recycling of the product insofar as all the components may be dismantled without it being necessary to unsolder elements or components.

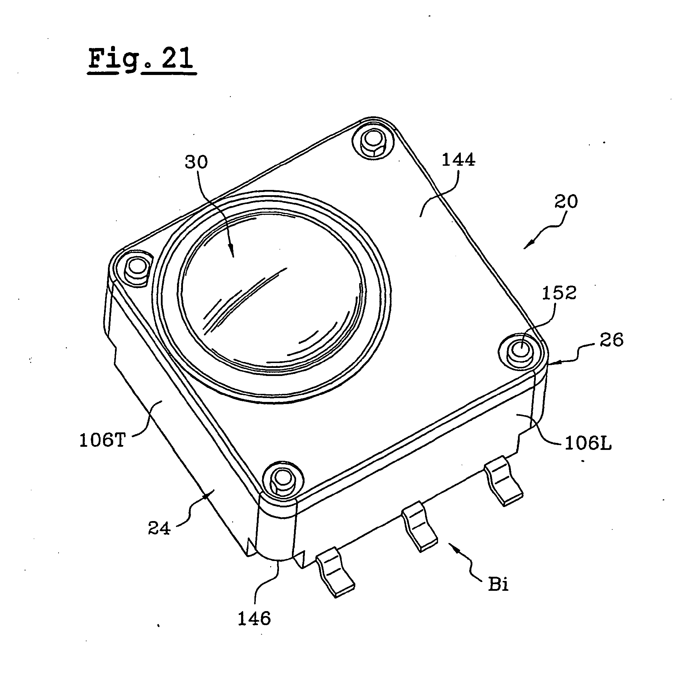

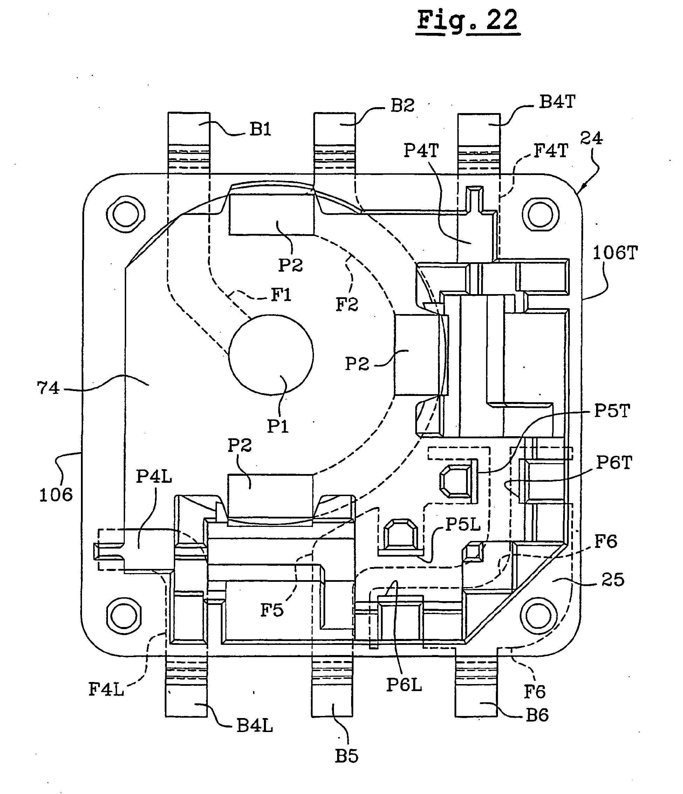

The solution is especially economical insofar as there is no soldering operation, insofar as its cost is lower than that of the known solution in which the flex is outside the component by being soldered under the component which then possesses linking outputs of the type of those of the embodiment of Figures 21 and 22.

The cost of this solution with a built-in flex is similar to that of the solution with linking tabs or overmoulded outputs (Figures 21 and 22). Specifically, the cost of the flex is in part compensated for by the omission of the fixed metal contacts traditionally embedded by overmoulding in the bottom of the housing.

In addition to there being no soldering operation, it is possible, owing to the absence of any reflow soldering, to make the housing by moulding from a plastic possessing inferior performance from the thermal resistance point of view, such a material costing less. The same is true for all the components contained in the housing which undergo no heating.

The incorporation of the flex with the device 20 makes it into an integrated component which is no longer a straightforward electrical linking cable, but a component which incorporates in particular fixed contact lugs which are arranged in one and the same plane, the overall design of the device taking this integration into account, in particular so as to employ a flat bottom 72, 74 to support the flex whose contact lugs are coplanar.

The manner of operation of the signal generators will now be described with reference in particular to Figures 8A to 8C.

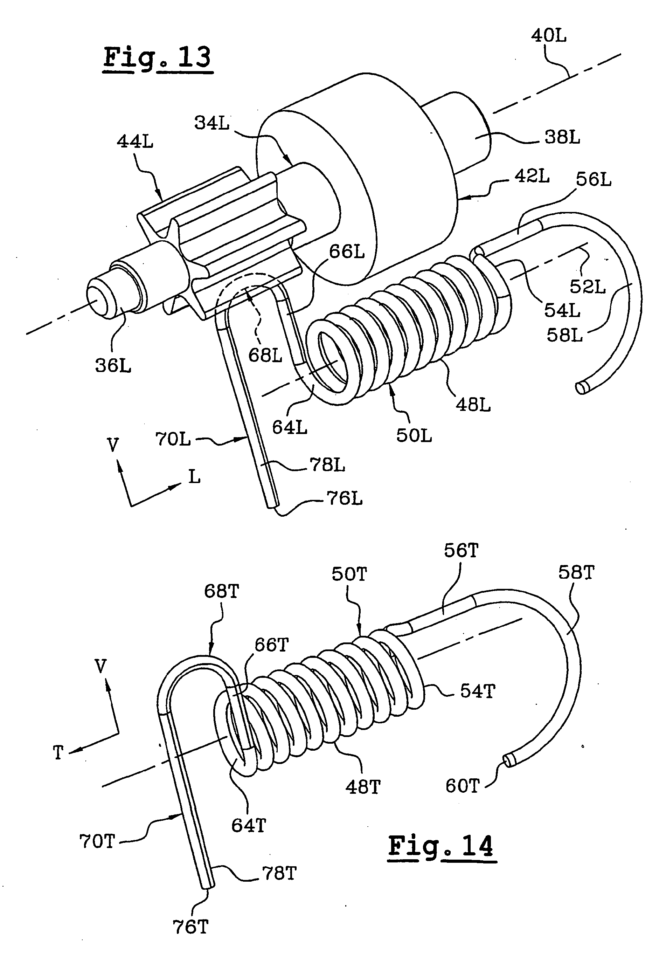

This description will be given with reference to the coding shaft 32L, the manner of operation of the other shaft being analogous insofar as all its components are identical, with the exception of the spring 50T which, for load balancing reasons, is of symmetric design with respect to the vertical plane 6-6, as may be seen by comparing Figures 13 and 14.

In the rest position represented in Figure 8A, the mobile contact rod 70L is vertical and its bent upper span 68L is received, with lateral play along the direction T, between the opposing flanks 45L of two consecutive teeth of the coding pinion 44L.

By causing a rotation of the ball 30 about its centre C, and here about a horizontal axis of longitudinal orientation, in the anticlockwise direction indicated by the arrow of Figure 8A, a rotation of the shaft 32L is caused in the clockwise direction about its axis of rotation 40L, as may be seen in Figure 8A.

This rotation causes the contacting of the flank 45L of the right-hand tooth which will then push the upper span 68L transversely, from right to left.

By virtue of the possibility of torsional elastic deformation of the body 48L of the spring 50L to which the rod 70L is tied and which functions as restoring spring for returning the rod 70L to its rest position, the latter tilts overall about the axis 52L until its lower contact span 78L comes into electrical contact against the lug P5L, and into abutment against the abutment surface 80L across the flex, thus establishing an electrical link between the lugs P4L and P5L.

The clockwise rotation of the roller 32L continues and this rotation causes, in the manner of a mechanism of the "Maltese Cross" type, the automatic escapement of the upper span 68L which continues its tilting movement so as subsequently to automatically return, together with the contact rod 70L, to its stable vertical position illustrated in Figure 8A, between the following two.

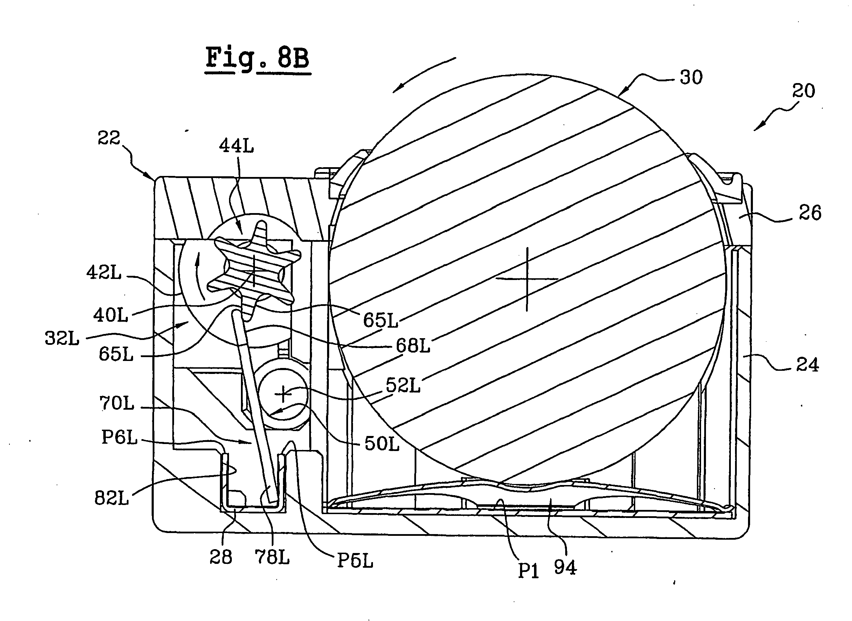

If the rotational movement of the ball 30 is continued in the same direction, the rod 70L will again tilt with the same orientation represented in Figure 8B so as to cause the generation of a new signal by virtue of the electrical contact which is again established between the lugs P5L and P4L.

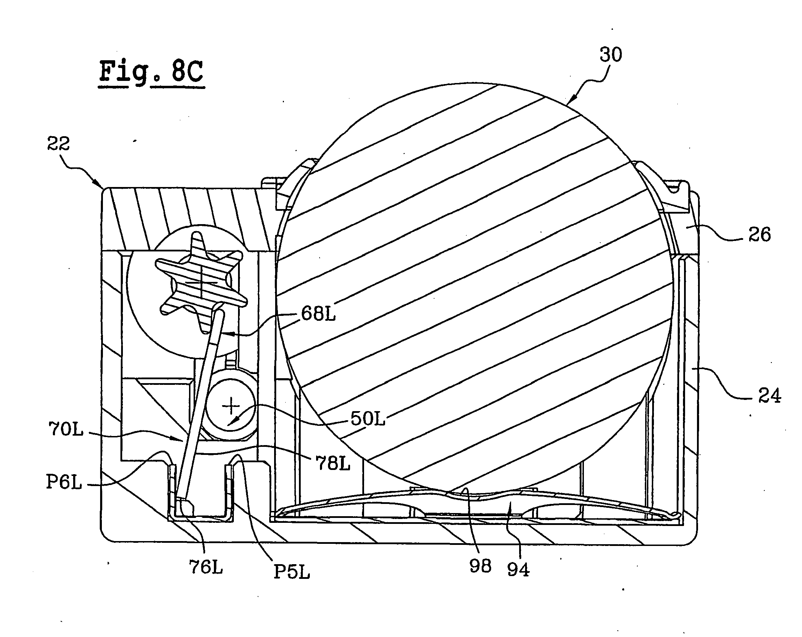

Conversely, if the ball 30 is driven in rotation in the other direction, in the clockwise direction when considering Figure 8A, the coding shaft 32L is driven in the anticlockwise direction, as may be seen in Figure 8C, and the tooth 65 causes the tilting of the contact rod 70L until its lower contact span 78 comes into contact against the conducting lug P6L and into abutment against the vertical surface 82L.

This coming into contact then establishes an electrical contact between the lugs P6L and P4L, generating a signal which is different from that resulting from the linking across the spring 50L of the lugs P5L and P4L.

This differentiation of the two types of signals, established between P4L and P5L or P4L and P6L, makes it possible to distinguish the direction of rotation of the relevant coding shaft, and hence the direction of rotation of the ball, doing so by means of a single mobile contact, 70L or 70T, for each signal generator.

The design and the dimensioning of the spring 50L with the contact rod 70L prevents the phenomena of rebound, doing so in particular by virtue of the fact that the span 68L, after negotiating a tooth via the automatic escapement phenomenon, is again received between two teeth whose flanks 45L constitute abutments for avoiding the rebound phenomenon. Rebounds are prevented in both directions, that is to say both towards the lug P5L and towards the lug P6L. The dimensioning of the elements, and in particular the pitch of the teeth of the pinion, prevents rebound against the opposite lug to that with which one has just established contact.

Of course, depending on the type of manipulation applied to the ball 30 by the user, the latter can cause the simultaneous rotation of both coding shafts 32L and 32T in one or other of their opposite directions of rotation.

The ball practically always revolves about a horizontal axis, and, as a function of the orientation of the plane of rotation of the ball, the numbers of pulses generated by the two generators are respectively proportional to the X and Y components of investigation of the cursor on the screen.

The driving of the rollers 42L, 42T carried by the shafts 32L, 32T is ensured by friction with the outer surface of the trackball 30.

The shafts together with the rollers are urged under elastic bearing against the ball by the hairpin springs 90L-92L and 90T-92T.

As is represented in Figure 8A, there is a vertical offset "h" of the centre C of the ball 30 beneath the plane in which the axes 40L and 40T of the coding shafts 32L and 32T are situated.

The spherical surface of the trackball 30 thus bears against the two rollers 42L, 42T with its centre C always beneath the plane of the axes 40L and 40T, and it is urged elastically upwards by the elastic dome 94 which is slightly prestressed elastically in its rest state illustrated in the figures, and in particular in Figure 8A.

In addition to its two contacts with the rollers 42L and 42T, the ball 30 also bears against a third bearing surface consisting of a land 130 formed in the spherical cap span-like edge 32 which delimits the circular opening 134 through which the apex of the ball 30 projects out of the housing 22. These four contact points, of which three are fixed and one is mobile, define the geometrical position of rest of the ball 30 with respect to the fixed housing 22.

When the direction of rotation of the ball 30 is such that the vertical component of the load exerted by the ball on the roller of the coding shaft is directed downwards, at their point of mutual contact, the load exerted by the operator on the ball 30 tends to increase the pressure of the ball on the roller of the coding shaft, and the large-diameter pivot 38L, 38T is in solid abutment against the vertical facet 87L, 87T of the housing. The pin-like spring 90L, 90T then has no function. In the opposite case, the load exerted by the operation tends to distance the ball 30 from the roller of the coding shaft, but the spring 90L, 90T guarantees maintained contact of the roller 42L, 42T with the ball 30, since the pivot 38L, 38T is not bearing against a vertical facet of the housing on the ball side.

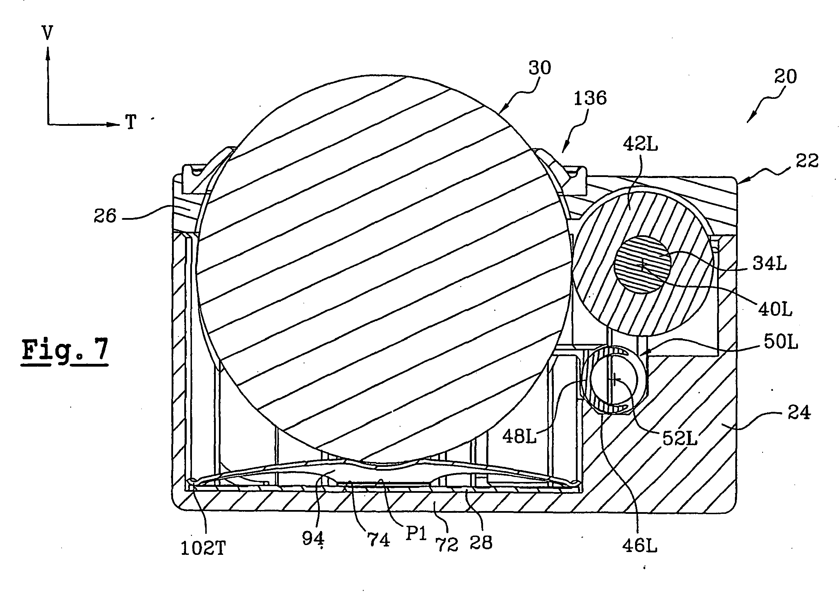

As may be seen for example in Figure 7, there is also provided a peripheral seal 136 with lip 138, which is overmoulded with the cover 26.

The design of the signal generators according to the invention, if it is compared with the known electromagnetic or electro-optical coding devices, is especially advantageous in that, in the rest state of each generator, there is no consumption of current in this standby state of the device 20.

Applying to the trackball 30 a vertical load F oriented globally in the direction parallel to the direction V effects entry.

This action has the effect of causing its downwards vertical displacement with respect to the lower part 24 of the housing and of causing a change of state of the monostable triggering member 94 until its central part 98 comes into contact with the conducting lug P1, thus causing electrical linking between the lugs P1 and P2 and hence between the wires F1 and F2, while affording the user a tactile sensation of actuation of the entry switch.

This entry action is direct from the actuator constituted by the ball 30 on the triggering member, that is to say without displacement of a subassembly as in the case of known designs, and it is thus possible to obtain a maximum tactile effect. In the example illustrated in the figures, the total elastic deflection of the dome 94 is of the order of 0.4 mm, its triggering requiring that a virtual load of 3 Newtons be applied to it.

The flexibility of the lip 138 of the scraper seal 136 makes it possible to ensure the tightness of the device during the entry action since the free edge 140 of the lip 138 always remains in contact with the peripheral surface of the ball 30 which moves downwards by only 0.4 mm.

Owing to the positioning of the centre C of the ball 30 beneath the plane of the axes 40L and 40T of the order of 0.1 mm, the entry action tends to "detach" the ball 30 from the rollers 42L, 42T and it thus has no nuisance effect on the rollers 42L and 42T, nor therefore on the generators of coded signals which remain in their states corresponding to their angular positions attained at the moment of entry.

Each roller 42L, 42T can be made by overmoulding, around the body 34L, 34T, of an elastomer whose choice together with the surface condition and the Shore hardness makes it possible to increase the coefficient of friction with the ball 30 which is, at its periphery, made of hard plastic.

If one wishes to favour a high investigation force to be applied to the ball 30, it is possible to invert the choice of materials, this having the effect of increasing the frictional loads of the ball 30 on the cover 26, 130, on the scraper seal 138, and especially on the entry dome 94. In this case, the tightness during entry can be ensured without any flexible lip or scraper seal (except during entry).

The peripheral surface of the ball 30 and/or the lip 136 of the seal 136 can undergo a water-repellent or oil-repellent treatment which makes it possible to reduce the risks of transport, in particular via the ball, into the device, and makes it possible to improve the effectiveness of cleaning of the ball by the scraper seal.

It will be noted that the dimensions of the device 230 are especially small and that it thus exhibits considerable compactness allowing easy integration thereof into a portable telephone.

The semi-toric shape of the upper part 142 of the body of the seal 136, which projects vertically upwards with respect to the upper face 144 of the cover 26, makes it possible to ensure the tightness of the bearing of the housing 22 of the device 20 against the opposing internal face (not represented) of the upper shell of the telephone, so that the circular opening formed in this shell for the passage of the apex of the ball 30 cannot be a possible inlet for dust or any other type of pollution into the telephone.

By virtue of the design with the flex 28, the device 20 with its housing 22 can be fixed under the internal face of the upper shell of the telephone by elastic clasping between flexible fingers belonging to the shell and whose hook-shaped lower ends are received in complementary notches 146 of the housing 24.

The elasticity of the semi-toric part 142 makes it possible to allow for the tolerances of manufacture and of elastic clasping. This mode of fixing replaces the mechanical fixing of the device 20 onto a printed circuit board and thus makes it possible to avoid having to correct defects of alignment of the ball 30 with the circular opening formed in the shell, that is to say it allows accurate centring of the "trackball" 20 with respect to the shell. This fixing also allows easy maintenance of the electronic apparatus such as the telephone.

Various steps of assembling the components of the device 20 may be seen in succession in Figures 4 and 10, then 18, 19, 16 and finally 20, before the mounting of the cover 26.

The positional holding of the span 120 of the flex 28 in the bottom 72, 74 of the lower part 24 of the housing 22 is ensured through the contact pressure of the four edges 142L and 142T of the member 94, of the strands 58L and 58T of the springs 50L and 50T. Moreover, the lower face 148 of a central foot 150 of the cover 26 pinches a facing part of the flex after hot crimping of the studs 152 for mounting and fixing the cover 26 onto the part 24.

This pinching is compounded with that by the lower edge 11 of the partition 110 of the cover which can be completed with complementary shapes (not represented) such as bumps and/or complementary hollows, formed in the edge 111 and/or in the facing part of the facing bottom 712, 74.

By hot crimping of ribs 154L, 154T formed in the bottom 72, 74 onto the flex 28 after the latter is placed in the bottom, the tensile strength of the flex 28, 120 is increased.

Thus, the length of the housing is equal to 12 mm, its transverse width to 12 mm and its height to 8.8 mm. The diameter of the ball 30 is equal to 8 mm, and it projects of the order of 2.1 mm above the upper face of the cover 26.

The embodiment represented in Figures 21 and 22 comprises a housing lower part 24 whose bottom is overmoulded around the fixed contacts which are extended via linking tabs or outputs Bi which here are of transverse orientation and distributed equally in threes over the two opposite sides of the housing. The coplanar tabs which project from the housing are equivalent to the terminals Bi of the flex 28 and they are joined to the fixed contacts Pi, arranged in the bottom 72, 74, by bands Fi embedded in the insulating moulding material of the lower part.

This symmetric and transverse design of the outputs facilitates the cutting-out of the fixed contacts emanating from one and the same band of metal with the shortest paths.

The balanced distribution of the two series of three outputs allows auto-centring of the device on the printed circuit board during the reflow soldering. This control of the soldered position of the "trackball" on the printed circuit board is especially important since the ball must be centred with respect to the circular hole for the passage of the ball in the shell of the telephone.

The lower part 24 no longer includes any opening 108, provided for the passage of the flex, and it includes two opposite walls 106T.

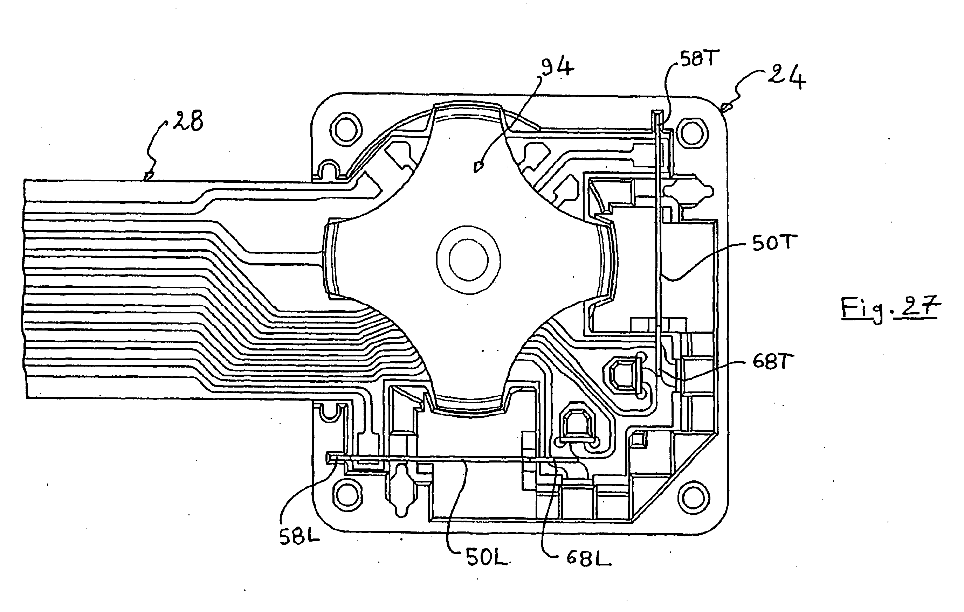

As shown in figure 27, the contact springs and rods 50L,50T-70L,70T can be realized in the form of a single element perfectly symmetrical and which can be used either as a longitudinal or transverse one 50L,T-58L,T-68L,T-70L,T.

Depending upon the size of the housing, the general length of the spring-rod element might be more or less important. When the ratio between this length and the diameter of the wire it is made of, is greater than 75 (seventy-five), it is possible to replace the torsion spiral spring 50L, 50T by a torsion bar spring 50L, 50T, i.e. a torsion spring whose external diameter is equal to the diameter of the wire.

It is sufficient that the elastic momentum or torque resulting from the cooperation between the loop 68L, 68T and the associated pinion 44L, 44T remains inferior to the driving momentum or torque of the trackball on the roller 42L, 42T.

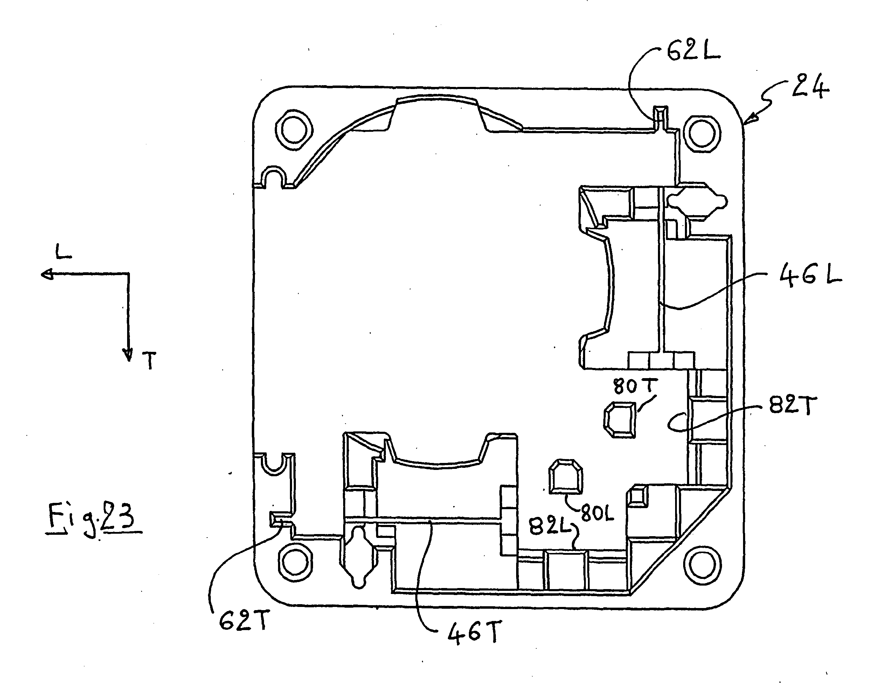

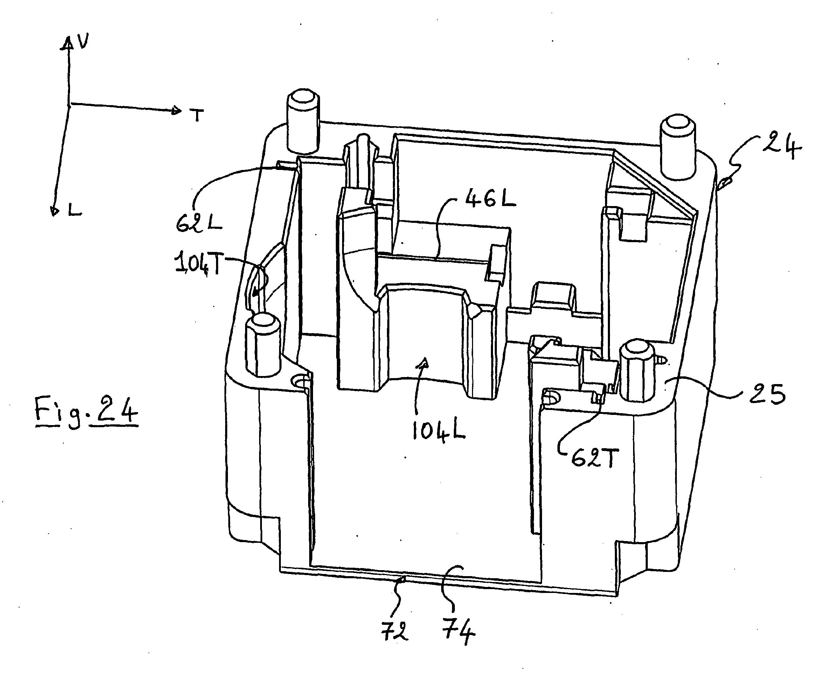

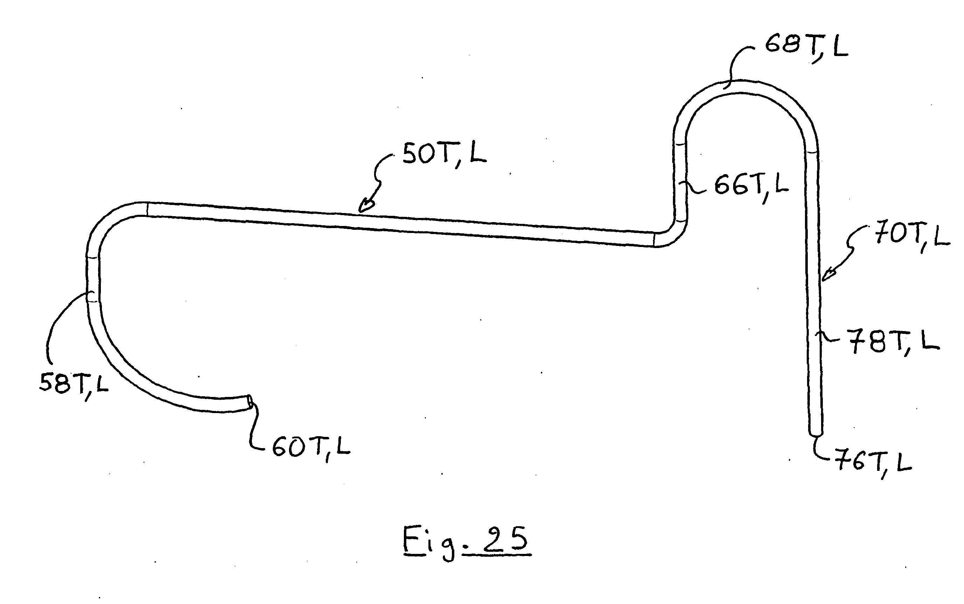

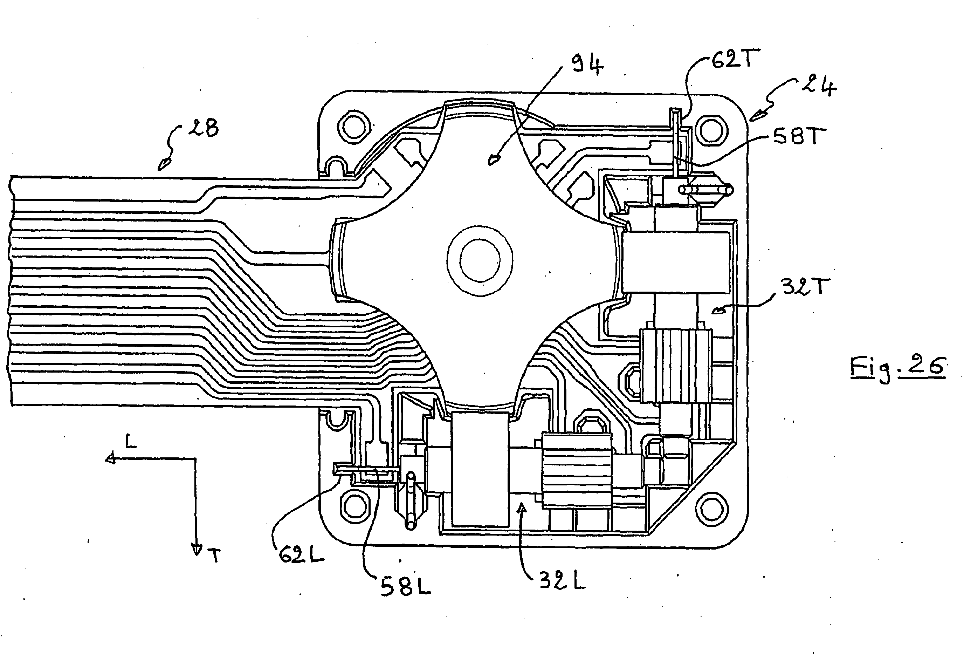

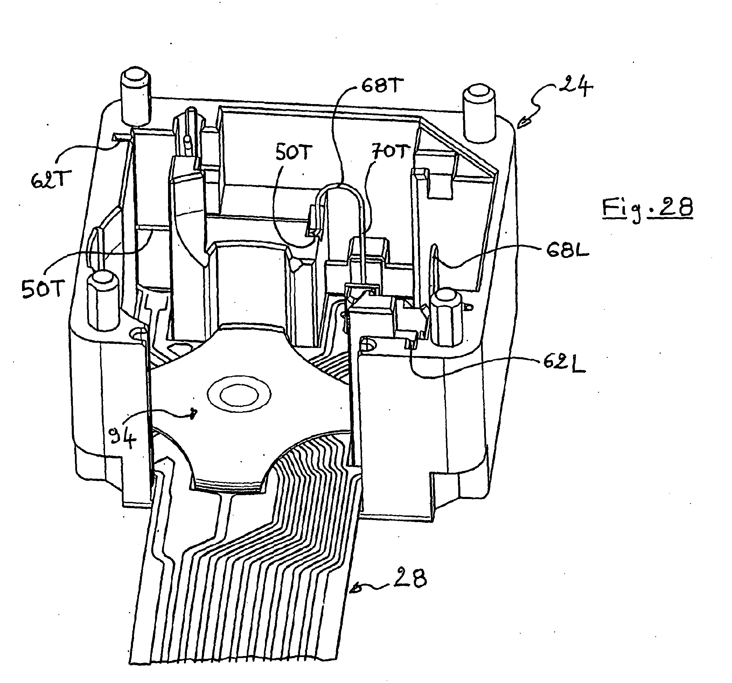

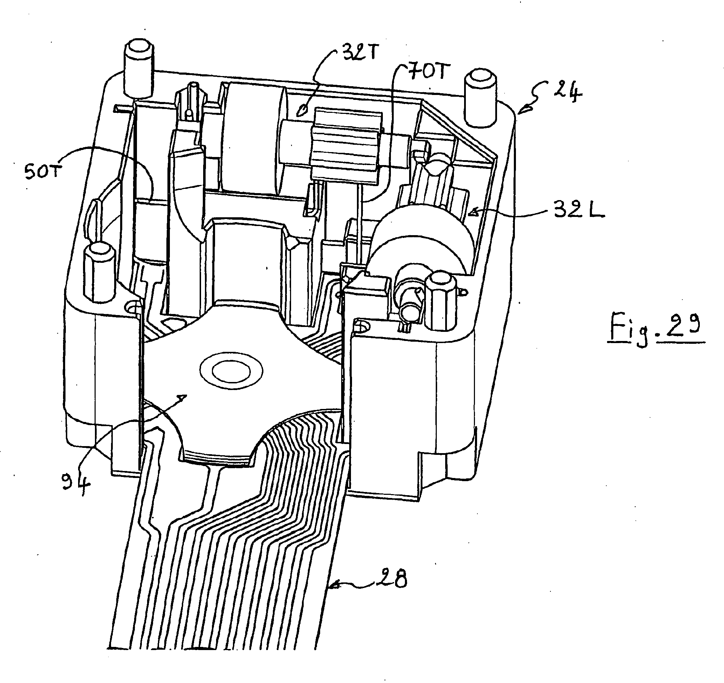

The spring is thus greatly simplified, as well as the corresponding receiving portions 46T,L and 62T,L of the lower part 24, and its overall length is reduced as can be seen in figures 23 to 29.

For many uses of a control trackball, it is desired that the trackball might be illuminated. This is the case in GSM telephones or similar radiotelephones, as well as for remote control devices such as those used for video projectors for which the user, who is in a dark or "night" environment needs to know the kind of order sent by the remote control device, for instance by the aid of various colours of illumination of the trackball which might be integrated in the remote control device itself, and/or on the projector..

Known solutions for the illumination of a trackball consist of a light source which is positioned vertically under the lower pole of the trackball.

But this is only possible when there is no triggering star and dome shaped member 94 under the lower portion of the trackball 30, otherwise it would increase the total overall height of the device and would result in very complicated arrangement for establishing the entry switching with a conducting lug P1.

The invention proposes to arrange at least one LED between two adjacent radial branches 100L, 100T of the triggering star shaped dome member 94. Thus, it is possible, for instance, to arrange two diametrically opposed LEDs 118, up to four LEDs, i.e. two pairs of diametrically opposed LEDs 118.

Each LED 118 is thus laterally offset with respect to the vertical axis passing through the centre C of the trackball 30, but it is also globally "under the ball.

The material of which the external layer of the ball, or the whole ball, is made of is preferably of an opal colour so that the light, coming directly or indirectly of the LED(s), and which reaches the ball is diffused in an excellent manner on the upper outside emerging portion of the trackball 30.

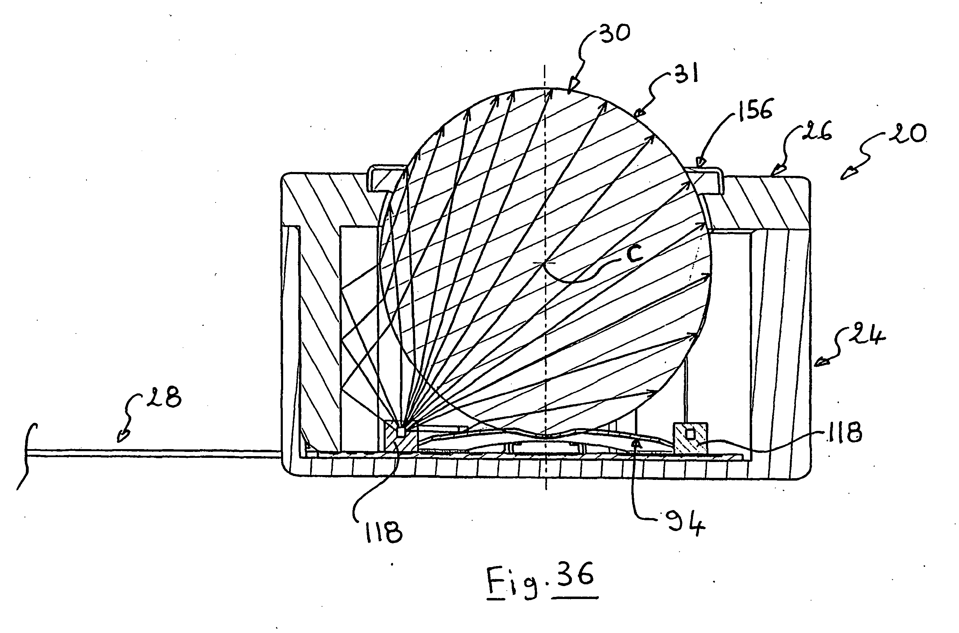

The rays of light, as shown in figure 36, may attack the ball directly, or after reflection on the various surrounding walls of the housing and on the upper face of the dome 94 which is made of stainless steel.

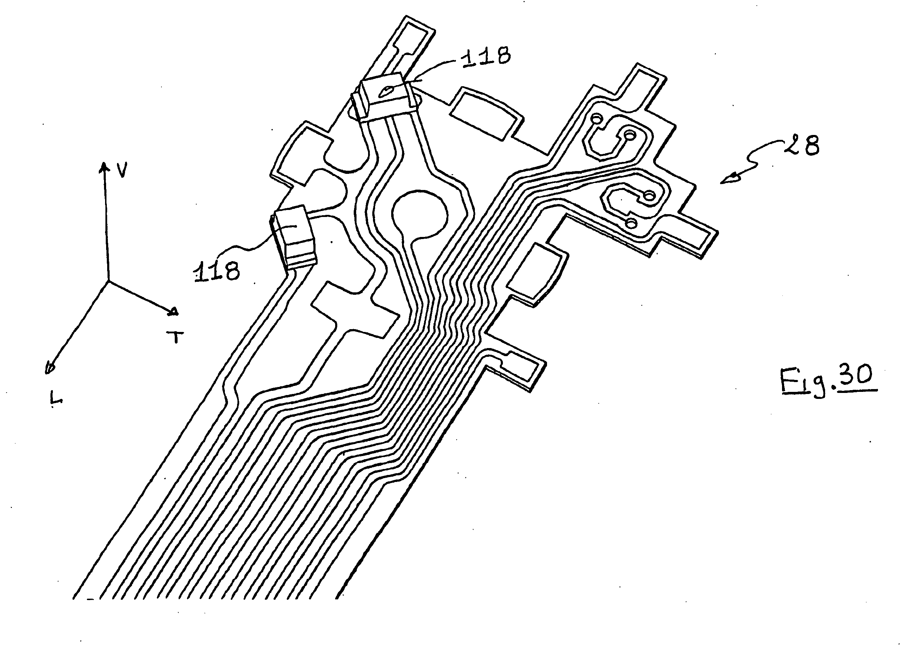

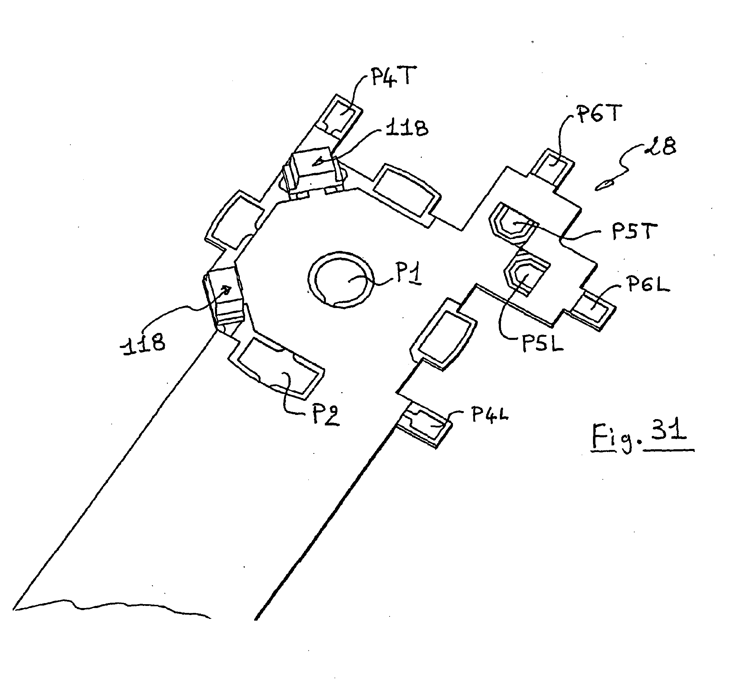

The implementation of the LEDs is particularly simple and advantageous with the use of the flex cable 28 on which the LEDs are soldered thereon before the assembly of the various components of the device as shown in figures 30 and 31 in which one pair of LEDs 118 is shown.

Furthermore, one or two LEDs only imply a very low increase of the price of the flex cable 28.

The use of three or four LEDs implies a design of the flex with narrow and close conducting tracks to bring them power

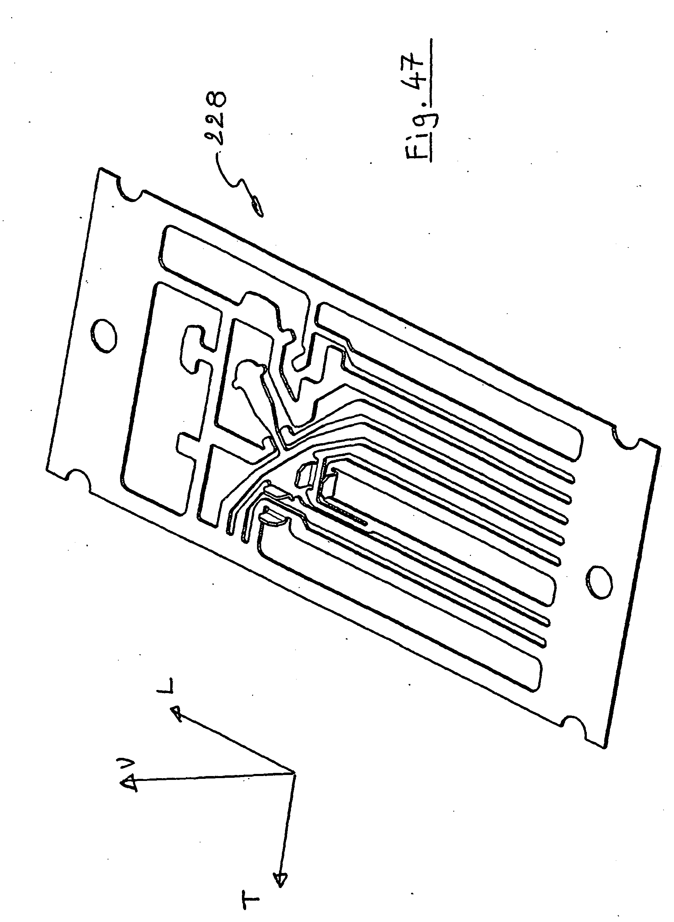

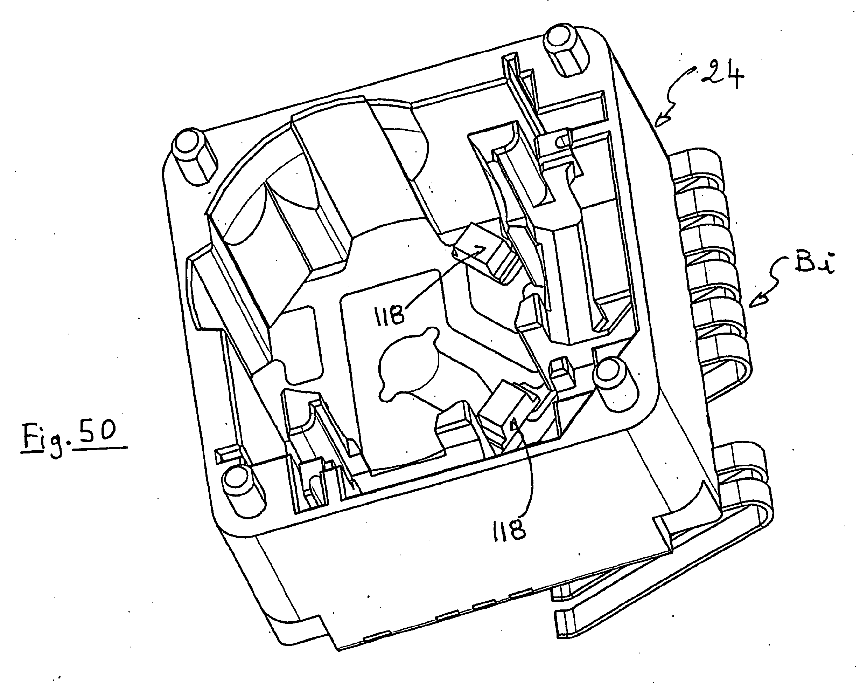

When the contacts are overmoulded, as it can be seen in figures 47 to 50, the LEDs are soldered, or glued with a conductive glue, in the bottom of the housing before the assembly of the various components of the device.

Depending on the desired intensity of illumination of the trackball 30, the input current for each LED is comprised between 5 and 20 mA.

The illumination of the ball might also constitute a "feed back" information for the user, for instance for indicating to the user the orientation or direction, and/or the sense of rotation of the ball, thus "guiding" the user.

For performing such a "guidance" of the user, it is possible to modify the intensity of the illumination, the colours, the frequency of flickering, etc. and combinations of these parameters.

The light emitted by a LED might be yellow, red, green, orange or blue.

For instance, let's suppose that the cursor must be displaced on the screen with an angle of 30° with respect to the horizontal "X" axis and on a length of 15mm.

The light signal emitted by the ball, which is governed by the software of the apparatus equipped with the trackball device, might be such that the duration of the "ON" and "OFF" switched states are as follows :
- They are identical if the ball is rotated in the plane passing by this angle of 30° (ratio of Y/X = 1);
- the duration of "OFF" is greater than the duration of "ON" (ratio of Y/X > 1) if the ball is rotated with an angle too far from the "X" axis;
- the duration of "ON" is greater than the duration of "OFF" (ratio of Y/X < 1) if the ball is rotated with an angle too close with the "X" axis;
- the flickering frequency, or a light intensity is in relation with de remaining distance for the cursor to travel.

The light signal is "fixed" ("ON" or "OFF") when the cursor has reached its correct final position.

The colour or the intensity is changed after entry.

In the example of Figure 7, a peripheral seal 136 with a lip 138, which is overmoulded with the cover 26, has been illustrated. This seal 136 may also be glued on the cover or upper part 26.

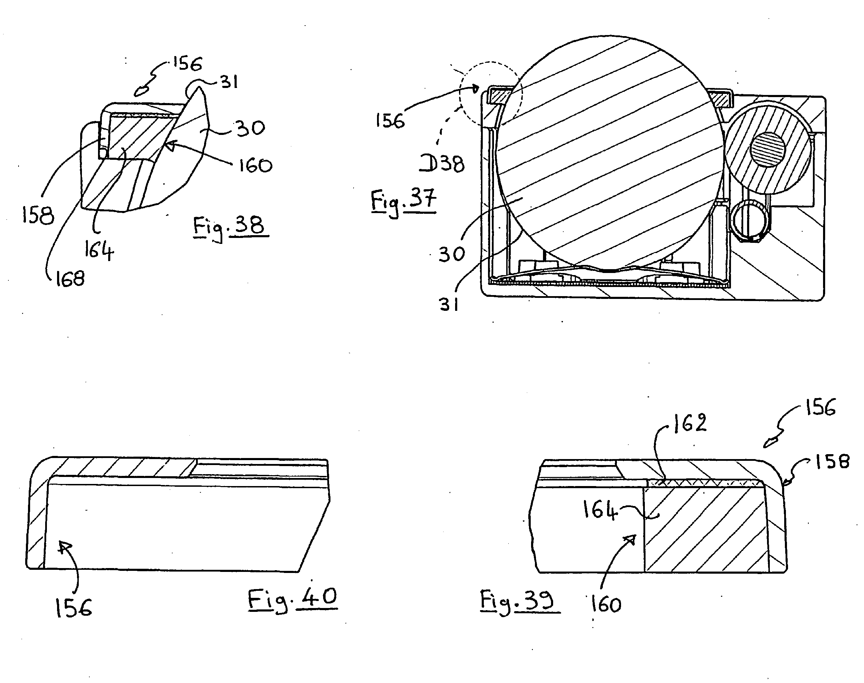

Another solution, illustrated in figures 37 to 43 consists in replacing the seal 136 by a wiping and sealing means 156 comprised of a metal cup shaped annular casing 158 and of an annular wiping element 160 made in the form of a washer which is for example a compound or sandwich of felt and "Teflon" (tetra-fluoric-ethylene).

In the example of figures 37 to 41, a layer of glue 162 is provided for fixing one single layer of felt 164 inside the annular metal casing 158.

The felt layer does provide a wiping or cleaning of the surface 31 of the trackball 30 when the latter rotates with respect to the wiping element 160.

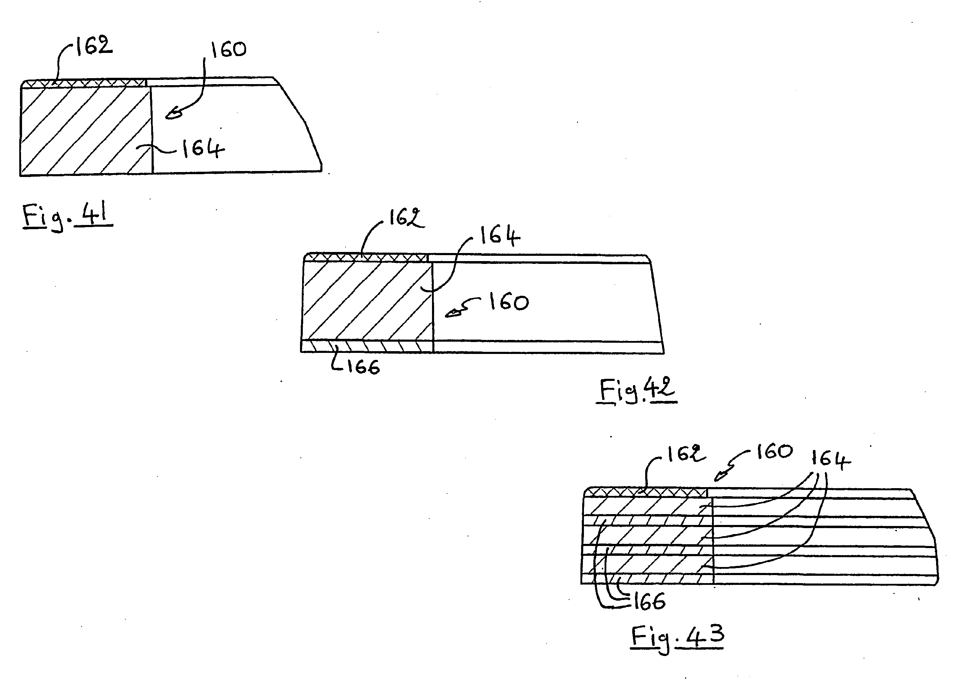

The wiping element 160 can be a multi-layered one including various numbers of felt layers 164 and of Teflon layers 166 as shown in figures 42 and 43.

Each layer of Teflon performs a sealing role or function in order to prevent that the particles created during the wiping of the surface 31 would enter inside the housing.

The total thickness of the wiping element 160 is about 0,5 mm.

The element 160 also constitutes a "static" seal in order to prevent the penetration of dust inside the device.

The two materials, felt and Teflon, provide a soft friction on the surface of the ball.

The annular casing 158 may be mounted by force or press fitting in the corresponding cavity 168 of the upper portion 126 of the housing. This is the case when the wiping means are provided one time for the whole life of the product.

On the contrary, the casing may be mounted loose in the cavity, i.e. with a radial play. It is then possible to have it as a disposable element and to replace it for maintenance purposes.

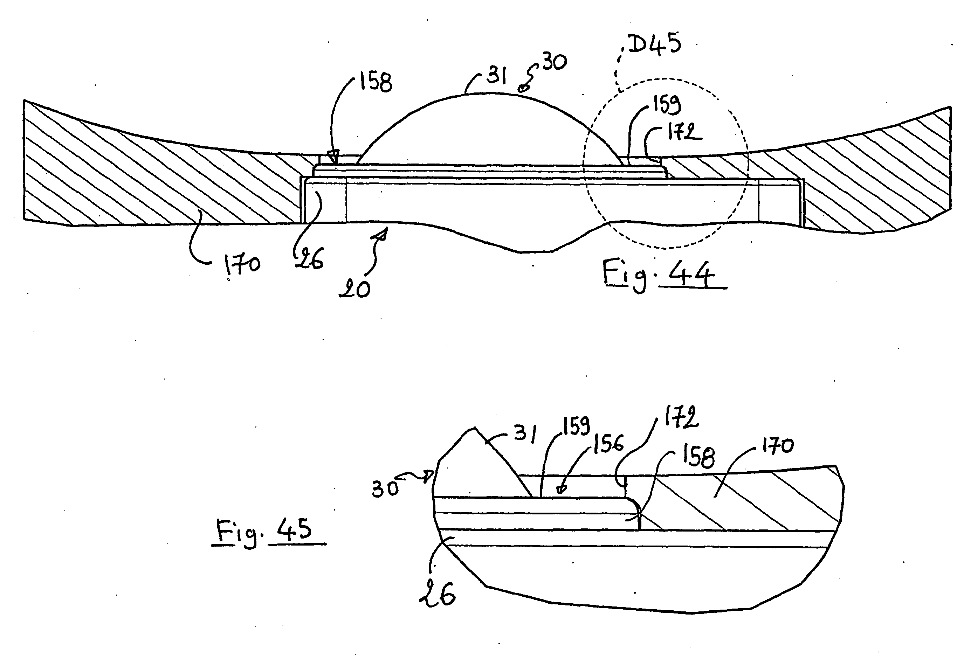

In this case, the casing 128 is held in place in the cavity 168 by a superior hood which, for instance and, as shown in figures 44 to 46, this hood 170 might be a portion of an upper cover element belonging to the electronic apparatus equipped with a trackball according to the invention.

The difference between the diameters of the opening 172 in the hood and the diameter of the ball in this plane, leaves apparent an annular portion of the upper annular metallic face 159 of the casing 158 which provides a very attractive visual effect seen from the outside of the apparatus.

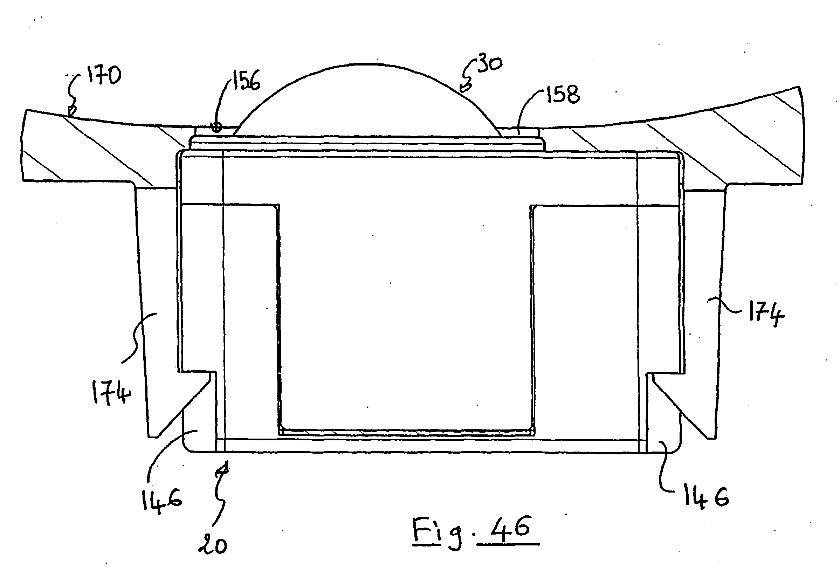

The whole device 20 may be elastically fitted under the hood 170, i.e. by means of elastic tangs 174 with hooks as shown in figure 46.

The user, who rotates the trackball to "navigate" on the screen, provides the very low energy which is necessary for the wiping of the ball.

Thus, the wiping or cleaning is continuous and permanent when the ball rotates in order to eliminate the pollution little by little as it "appears" on the outside portion of surface 31 the ball 30.

The nature of the surface material of the ball is an other major parameter for the efficiency of the wiping of the ball.

According to the invention, it is necessary that this material be chosen so that it has a natural propensity not to have the pollution to stick to the surface 31 of the ball 30.

It is possible to apply surface treatments to the ball, more or less in depth.

It is also possible to impregnate the felt with a repellent product or substance such as a hydrophobic or "oil phobic" product.

Preferably, the applicant has determined that the surface material of the ball should have a low surface tension.

More preferably, the surface tension should be inferior to 32mN/m, i.e. inferior to 32 milliNewton by meter.

The "Delrin" material from Du Pont de Nemours is an example of such a material convenient for making the surface of the ball, and also the whole ball in one piece.

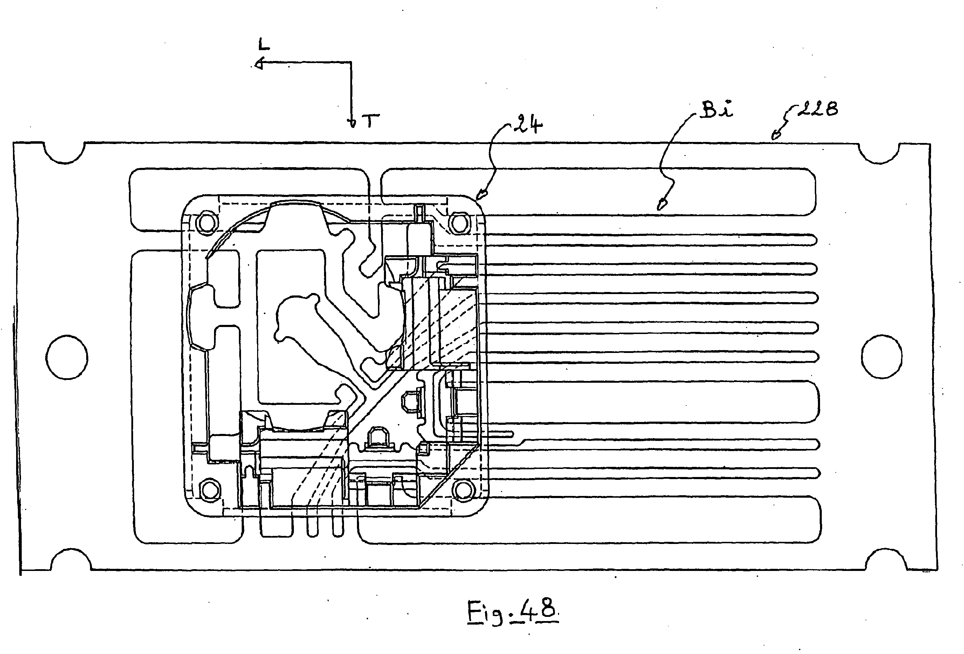

Figure 47 shows another example of a frame 228 of various contacts and lead connections, of the type used in figures 21 and 22, on which the lower part 24 is overmoulded as shown on figure 48.

Such a conception does permit to have all the terminal tabs Bi and others on the same lateral side of the housing of the device 20, in the form of a single row of tabs.

This permits to save place on the printed circuit board of the apparatus which receives the trackball device 20.

The tabs may be bent in various configurations.

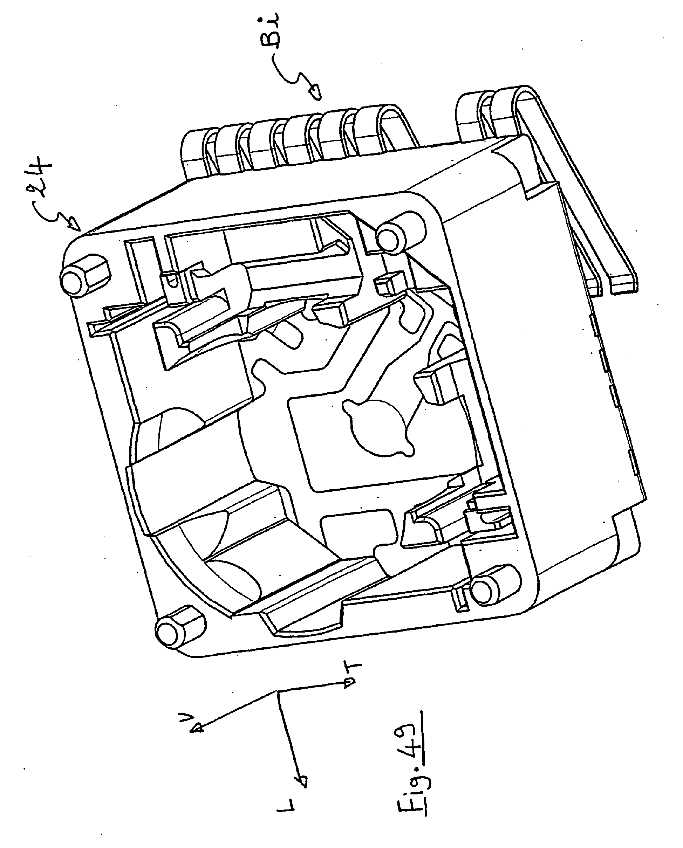

For instance they can be shaped like hairpins as in figures 49 to 51.

This provides the contact tabs Bi and others with a significant capacity to be elastically deformed and with an important "travel", thus permitting, for instance, to fix the trackball device under the hood of the apparatus. In this case, it is very simple to be sure that the trackball device is perfectly centred with respect to the opening 172 of the hood 170. It also facilitates the "sealing" around the ball.

It is also possible to realise the upper part 26 of the housing of the trackball 20 moulded in one piece with the hood 170.

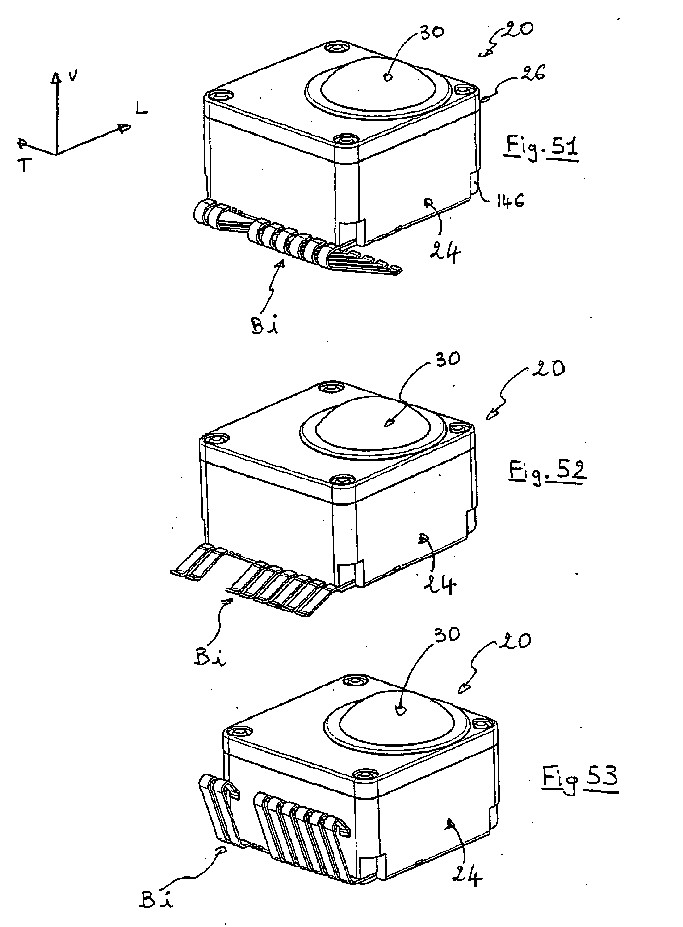

As it can be seen on figure 52, the contact tabs may extend forward laterally with an altitude of their free ends depending on the position of the lower face of the lower part 24 with respect to the upper face of the printed circuit board.

According to the solution of figure 53, the tabs are bent laterally and upwardly for when there is no sufficient place to vertically superpose the trackball device and a printed circuit board.

## Claims

1. Control device (20) of the type comprising a housing (22, 24, 26) in which are arranged two orthogonal revolving coding shafts (32L, 32T) driven in rotation, each in both directions, by a trackball (30) mounted rotatably in the housing, and of the type in which each shaft is tied in rotation to a mobile coding element (44L, 44T) belonging to a generator of control signals, in particular for the displacement of a cursor over a screen of an electronic apparatus,
**characterized in that** the generator of control signals comprises :
- a mobile contact rod (70L, 70T) which, in its rest position towards which it is elastically restored, lies along a substantially vertical direction (V) in which a lower span (78L, 78T) of the rod is received with play between two fixed and opposed contact lugs (P5L-P6L, P5T-P6T) of vertical orientation, and which is mounted tilting globally about a horizontal axis (52L, 52T) parallel to the axis (40L, 40T) of the associated coding shaft (32L, 32T);
- and a toothed pinion (44L, 44T), tied in rotation to the associated coding shaft, between two consecutive teeth (45L, 45T) of which is received an upper span (68L, 68T) of the mobile contact rod (70L, 70T) in the rest position, in such a way as to cause the tilting of the contact rod (70L, 70T), in one direction or the other, when the associated coding shaft (32L, 32T) is driven in rotation so as to establish electrical contact between the lower span (78L, 78T) and one or other of the two fixed contact lugs (P5L-P6L, P5T-P6T), and to cause the automatic escapement of the upper span (68L, 68T) from the space delimited by the two consecutive teeth (45L, 45T) beyond a specified angle of rotation of the associated coding shaft (32L, 32T).

2. Device according to the preceding claim, **characterized in that** the tilting axis (52L, 52T) is situated vertically between the lower span (78L, 78T) and upper span (68L, 68T) of the mobile contact rod (70L, 70T).

3. Device according to the preceding claim, **characterized in that** the mobile contact rod (70L, 70T) is tied in rotation to the last turn (64L, 64T) of one end of a torsion spring (50L, 50T), made of metallic wire, of horizontal axis (52L, 52T) whose cylindrical body (48L, 48T) is accommodated in the housing whose other end (58L, 58T) is rotationally locked.

4. Device according to any one of the preceding claims, **characterized in that** the lower span (78L, 78T) is the lower free end span of the mobile contact rod (70L, 70T).

5. Device according to Claim 4 taken in combination with Claim 3, **characterized in that** the upper span (68L, 68T) is a 180° bent span which joins the mobile contact rod (70L, 70T) to the last turn (64L, 64T) of the spring.

6. Device according to the preceding claim, **characterized in that** the bent span (68L, 68T) lies in a vertical plane parallel to the axis (52L, 52T) of the spring (50L, 50T) and substantially tangential to the periphery of the body (48L, 48T) of the spring.

7. Device according to the preceding claim, **characterized in that** the horizontal axis (52L, 52T) of the spring (50L, 50T) is offset transversely with respect to the axis (40L, 40T) of the associated coding shaft (32L, 32T).

8. Device according to any one of Claims 5 to 7, **characterized in that** the contact rod (70L, 70T) is made in one piece with the spring (50L, 50T).

9. Device according to any one of Claims 2 to 8, **characterized in that** the housing (22) comprises a lower part (24), open vertically towards the top, in the bottom (72, 74) of which are arranged the fixed contact lugs (P5L-P6L, P5T-P6T) and which comprises recesses open towards the top, which accommodate spans (38L, 38T) of each coding shaft (32L, 32T) for its rotational mounting in the housing, and recesses, of semi cylindrical overall shape (46L, 46T), which accommodate the cylindrical body (48L, 48T) of each spring (50L, 50T).

10. Device according to any one of the preceding claims, **characterized in that** it comprises an electric switch (94, P2), in particular for entering a position of the cursor on the screen, of the type comprising at least two fixed contact lugs (P2) arranged in the bottom (72, 74) of the housing and a triggering member (94) of arched general shape which is elastically deformable, from a rest position, under the action of a vertically oriented load applied to the ball (30), so as to establish an electrical link between the two fixed contact lugs.

11. Device according to the preceding claim, **characterized in that** the triggering member (94) comprises a central part (98) which delimits a cavity in the form of a hollow spherical cap which directly receives a part of the trackball (30).

12. Device according to the preceding claim, **characterized in that** the fixed contact lugs (P2L, P2T) of the electric switch and the fixed contact lugs (P5L-P6L, P5T-P6T) of the signal generators are conducting contact lugs (Pi) belonging to the upper face of one end (120) of a flat cable (29) received in the bottom (72, 74) of the lower part (24) of the housing.

13. Device according to the preceding claim taken in combination with Claim 3, **characterized in that** the spring is a spiral spring and **in that** the first turn (58L, 58T) of the spiral spring is extended vertically downwards via a linking strand (58L, 58T), and **in that** the upper face of the flat cable comprises an additional fixed contact lug (P4L, P4T) with which the said linking strands (58L, 58T) are in electrical contact.

14. Device according to Claim 11, **characterized in that** the centre of rotation (C) of the trackball (30) is situated below the plane which contains the axes (40L, 40T) of rotation of the coding shafts (32L, 32T).

15. Device according to any one of the preceding claims, **characterized in that** each coding shaft (32L, 32T) is driven in rotation by the ball (30) by friction.

16. Device according to the preceding claim taken in combination with Claim 14, **characterized in that,** at rest, the triggering member (94) elastically urges the trackball (30) upwards in contact with the coding shafts (32L, 32T) and bearing on a solid abutment (130) offset upwards with respect to the centre (C) of the trackball (30).

17. Device according to anyone of the preceding claims, **characterized in that** means (118) is provided for illuminating the trackball (30).

18. Device according to claim 17, **characterized in that** said illumination means (118) are comprised of at least one light source arranged inside the body (22, 24) of the device for directly or indirectly illuminating the surface (31) of the trackball.

19. Device according to claim 18, **characterized in that** the housing (22) comprises a lower part (24), open vertically towards the top, in the bottom (72, 74) of which are arranged the fixed contact lugs (P5L-P6L, P5T-P6T) and in the bottom of which at least one light source (118) is arranged.

20. Device according to claim 12, **characterized in that** said triggering member (94) comprises several radial branches (100T, 100L), and **in that** said light source (118) is arranged between two consecutive radial branches.

21. Device according to anyone of claims 18 to 20, **characterized in that** said illumination means (118) is comprised of at least one coloured light emitting diode (118).

22. Device according to anyone of the preceding claims, **characterized in that** it comprises means (156) for wiping the surface (31) of the trackball (30).

23. Device according to the preceding claim, **characterized in that** said wiping means includes a wiping washer (160), lodged in a cavity of an upper part (26) of the device, which permanently cooperates with the surface (31) of the trackball (30).

24. Device according to claim 22 or 23, **characterized in that** said wiping means is disposable means.

25. Device according to anyone of the preceding claims, **characterized in that** the outside surface (31) of the trackball (30) is made of a material having a surface tension which is lower than a predetermined value.

26. Device according to the preceding claim, **characterized in that** the surface tension is lower than 32 milliNewton by meter(32mN/m).

## Patentansprüche

1. Steuereinrichtung (20) von der Art, die ein Gehäuse (22, 24, 26) aufweist, in dem zwei rechtwinklige, drehende Codierwellen (32L, 32T), von einem Trackball (30), der im Gehäuse drehbar montiert ist, jeweils in beide Richtungen drehend angetrieben, angeordnet sind, und von der Art, bei der jede Welle drehend an ein bewegliches Codierelement (44L, 44T) gekoppelt ist, das zu einem Generator von Steuersignalen, besonders für die Verschiebung eines Cursors über einen Bildschirm eines Elektrogeräts, gehört,
**dadurch gekennzeichnet, dass** der Generator von Steuersignalen aufweist:
- eine bewegliche Kontaktstange (70L, 70T), die in ihrer Ruhestellung, in die sie elastisch zurückgesetzt wird, in einer im Wesentlichen vertikalen Richtung (V) liegt, in der ein unterer Abschnitt (78L, 78T) der Stange mit Spiel zwischen zwei festen und gegenüberliegenden Kontaktfahnen (P5L-P6L, P5T-P6T) in vertikaler Ausrichtung aufgenommen wird und die kippend allgemein um eine horizontale Achse (52L, 52T) parallel zur Achse (40L, 40T) der zugehörigen Codierwelle (32, 32T) montiert ist;
- und ein Zahnritzel (44L, 44T), drehend an die zugehörige Codierwelle gekoppelt, zwischen dessen zwei aufeinanderfolgenden Zähnen (45L, 45T) ein oberer Abschnitt (68L, 68T) der beweglichen Kontaktstange (70L, 70T) in der Ruhestellung aufgenommen wird dergestalt, dass er die Kippbewegung der Kontaktstange (70L, 70T) in die eine oder die andere Richtung herbeiführt, wenn die zugehörige Codierwelle (32L, 32T) drehend angetrieben wird, um einen elektrischen Kontakt zwischen dem unteren Abschnitt (78L, 78T) und der einen oder der anderen der beiden festen Kontaktfahnen (P5L-P6L, P5T-P6T) herzustellen und die automatische Freigabe des oberen Abschnitts (68L, 68T) aus dem von den zwei aufeinanderfolgenden Zähnen (45L, 45T) begrenzten Raum über einen bestimmten Drehwinkel der zugehörigen Codierwelle (32L, 32T) hinaus herbeizuführen.

2. Einrichtung gemäß dem vorangegangenen Anspruch, **dadurch gekennzeichnet, dass** die Kippachse (52L, 52T) sich vertikal zwischen dem unteren Abschnitt (78L, 78T) und dem oberen Abschnitt (68L, 68T) der beweglichen Kontaktstange (70L, 70T) befindet.

3. Einrichtung gemäß dem vorangegangenen Anspruch, **dadurch gekennzeichnet, dass** die bewegliche Kontaktstange (70L, 70T) drehend an die letzte Windung (64L, 64T) eines Endes einer Drehfeder (50L, 50T), die aus Metalldraht hergestellt ist und eine horizontale Achse (52L, 52T) besitzt, gekoppelt ist, deren zylindrischer Körper (48L, 48T) sich in dem Gehäuse befindet, dessen anderes Ende (58L, 58T) drehverriegelt ist.

4. Einrichtung gemäß irgendeinem der vorangegangenen Ansprüche, **dadurch gekennzeichnet, dass** der untere Abschnitt (78L, 78T) der untere freie Endabschnitt der beweglichen Kontaktstange (70L, 70T) ist.

5. Einrichtung gemäß Anspruch 4 in Verbindung mit Anspruch 3, **dadurch gekennzeichnet, dass** der obere Abschnitt (68L, 68T) ein um 180° gebogener Abschnitt ist, der die bewegliche Kontaktstange (70L, 70T) mit der letzten Windung (64L, 64T) der Feder verbindet.

6. Einrichtung gemäß dem vorangegangen Anspruch, **dadurch gekennzeichnet, dass** der gebogene Abschnitt (68L, 68T) in einer vertikalen Ebene parallel zur Achse (52L, 52T) der Feder (50L, 50T) und im Wesentlichen tangential zum Umfang des Körpers (48L, 48T) der Feder liegt.

7. Einrichtung gemäß dem vorangegangen Anspruch, **dadurch gekennzeichnet, dass** die horizontale Achse (52L, 52T) der Feder (50L, 50T) quer zur Achse (40L, 40T) der zugehörigen Codierwelle (32L, 32T) versetzt ist.

8. Einrichtung gemäß irgendeinem der Ansprüche 5 bis 7, **dadurch gekennzeichnet, dass** die Kontaktstange (70L, 70T) in einem Stück mit der Feder (50L, 50T) hergestellt ist.

9. Einrichtung gemäß irgendeinem der Ansprüche 2 bis 8, **dadurch gekennzeichnet, dass** das Gehäuse (22) einen unteren Teil (24) aufweist, der vertikal nach oben offen ist, in dessen Unterseite (72, 74) die festen Kontaktfahnen (P5L-P6L, P5T-P6T) angeordnet sind und der nach oben offene Vertiefungen, die Abschnitte (38L, 38T) jeder Codierwelle (32L, 32T) für ihre Drehbefestigung im Gehäuse aufnehmen, und Vertiefungen von allgemein halbzylindrischer Form (46L, 46T) aufweist, die den zylindrischen Körper (48L, 48T) jeder Feder (50L, 50T) aufnehmen.

10. Einrichtung gemäß irgendeinem der vorangegangenen Ansprüche, **dadurch gekennzeichnet, dass** sie einen elektrischen Schalter (94, P2) besonders zum Eingeben einer Position des Cursors auf dem Bildschirm von der Art aufweist, die mindestens zwei in der Unterseite (72, 74) des Gehäuses angeordnete, feste Kontaktfahnen (P2) und ein Auslöseelement (94) von allgemein gebogener Form aufweist, das von einer Ruhestellung aus durch die Wirkung einer auf die Kugel (30) ausgeübten, vertikal gerichteten Last elastisch verformbar ist, um eine elektrische Verbindung zwischen den zwei festen Kontaktfahnen herzustellen.

11. Einrichtung gemäß dem vorangegangenen Anspruch, **dadurch gekennzeichnet, dass** das Auslöseelement (94) einen Mittelteil (98) aufweist, der einen Hohlraum in Form einer Kalotte begrenzt, der direkt einen Teil des Trackballs (30) aufnimmt.

12. Einrichtung gemäß dem vorangegangenen Anspruch, **dadurch gekennzeichnet, dass** die festen Kontaktfahnen (P2L, P2T) des elektrischen Schalters und die festen Kontaktfahnen (P5L-P6L, P5T-P6T) der Signalgeneratoren leitende Kontaktfahnen (Pi) sind, die zur oberen Fläche eines Endes (120) eines Flachkabels (29) gehören, das in der Unterseite (72, 74) des unteren Teils (24) des Gehäuses aufgenommen wird.

13. Einrichtung gemäß dem vorangegangenen Anspruch in Verbindung mit Anspruch 3, **dadurch gekennzeichnet, dass** die Feder eine Spiralfeder ist, dass die erste Windung (58L, 58T) der Spiralfeder vertikal abwärts über einen Verbindungsschenkel (58L, 58T) verlängert wird und dass die obere Fläche des Flachkabels eine zusätzliche feste Kontaktfahne (P4L, P4T) aufweist, mit der die Verbindungsschenkel (58L, 58T) in elektrischem Kontakt stehen.

14. Einrichtung gemäß Anspruch 11, **dadurch gekennzeichnet, dass** der Mittelpunkt der Drehung (C) des Trackballs (30) unter derjenigen Ebene liegt, welche die Drehachsen (40L, 40T) der Codierwellen (32L, 32T) enthält.

15. Einrichtung gemäß irgendeinem der vorangegangenen Ansprüche, **dadurch gekennzeichnet, dass** jede Codierwelle (32L, 32T) von der Kugel (30) durch Reibung drehend angetrieben wird.

16. Einrichtung gemäß dem vorangegangenen Anspruch in Verbindung mit Anspruch 14, **dadurch gekennzeichnet, dass** im Ruhezustand das Auslöseelement (94) den Trackball (30) im Kontakt mit den Codierwellen (32L, 32T) elastisch nach oben drückt und an ein massives Widerlager (130) anliegt, das bezogen auf den Mittelpunkt (C) des Trackballs (30) nach oben versetzt ist.

17. Einrichtung gemäß irgendeinem der vorangegangenen Ansprüche, **dadurch gekennzeichnet, dass** eine Vorrichtung (118) zum Beleuchten des Trackballs (30) vorgesehen ist.

18. Einrichtung gemäß Anspruch 17, **dadurch gekennzeichnet, dass** die Beleuchtungsvorrichtung (118) aus mindestens einer Lichtquelle besteht, die im Inneren des Körpers (22, 24) der Einrichtung zum direkten oder indirekten Beleuchten der Oberfläche (31) des Trackballs angeordnet ist.

19. Einrichtung gemäß Anspruch 18, **dadurch gekennzeichnet, dass** das Gehäuse (22) einen vertikal nach oben offenen, unteren Teil (24) aufweist, in dessen Unterseite (72, 74) die festen Kontaktfahnen (P5L-P6L, P5T-P6T) angeordnet sind und in dessen Unterseite mindestens eine Lichtquelle (118) angeordnet ist.

20. Einrichtung gemäß Anspruch 12, **dadurch gekennzeichnet, dass** das Auslöseelement (94) mehrere radiale Fortsätze (100T, 100L) aufweist und dass die Lichtquelle (118) zwischen zwei aufeinanderfolgenden radialen Fortsätzen angeordnet ist.

21. Einrichtung gemäß irgendeinem der Ansprüche 18 bis 20, **dadurch gekennzeichnet, dass** die Beleuchtungsvorrichtung (118) aus mindestens einer farbigen Leuchtdiode (118) besteht.

22. Einrichtung gemäß irgendeinem der vorangegangenen Ansprüche, **dadurch gekennzeichnet, dass** sie eine Vorrichtung (156) zum Wischen der Oberfläche (31) des Trackballs (30) aufweist.

23. Einrichtung gemäß dem vorangegangenen Anspruch, **dadurch gekennzeichnet, dass** die Wischvorrichtung eine in einem Hohlraum eines oberen Teils (26) der Einrichtung untergebrachte Wischscheibe (160) aufweist, die mit der Oberfläche (31) des Trackballs (30) ständig zusammenwirkt.

24. Einrichtung gemäß Anspruch 22 oder 23, **dadurch gekennzeichnet, dass** die Wischvorrichtung wegwerfbar ist.

25. Einrichtung gemäß irgendeinem der vorangegangenen Ansprüche, **dadurch gekennzeichnet, dass** die äußere Oberfläche (31) des Trackballs (30) aus einem Material mit einer Oberflächenspannung hergestellt ist, die niedriger als ein zuvor bestimmter Wert ist.

26. Einrichtung gemäß dem vorangegangenen Anspruch, **dadurch gekennzeichnet, dass** die Oberflächenspannung niedriger als 32 milliNewton pro Meter (32 mN/m) ist.

## Revendications

1. Dispositif (20) de commande du type comportant un boîtier (22, 24, 26) dans lequel sont agencés deux arbres tournants orthogonaux de codage (32L, 32T) entraînés en rotation, chacun dans les deux sens, par une boule de commande (30) montée à rotation dans le boîtier, et du type dans lequel chaque arbre est lié en rotation à un élément mobile de codage (44L, 44T) appartenant à un générateur de signaux de commande, notamment des déplacements d'un curseur sur un écran d'un appareil électronique,
**caractérisé en ce que** le générateur de signaux de commande comporte :
- une tige mobile de contact (70L, 70T) qui, dans sa position de repos vers laquelle elle est rappelée élastiquement, s'étend selon une direction sensiblement verticale (V) dans laquelle un tronçon inférieur (78L, 78T) de la tige est reçu avec jeu entre deux plots fixes et opposés (P5L-P6L, P5T-P6T) de contact d'orientation verticale, et qui est montée basculante globalement autour d'un axe horizontal (52L, 52T) parallèle à l'axe (40L, 40T) de l'arbre de codage associé (32L, 32T) ;
- et un pignon denté (44L, 44T), lié en rotation à l'arbre de codage associé, entre deux dents consécutives (45L, 45T) duquel est reçu un tronçon supérieur (68L, 68T) de la tige mobile de contact (70L, 70T) en position de repos, de manière à provoquer le basculement de la tige de contact (70L, 70T), dans l'un ou l'autre sens, lorsque l'arbre de codage associé (32L, 32T) est entraîné en rotation pour établir un contact électrique entre le tronçon inférieur (78L, 78T) et l'un ou l'autre des deux plots fixes de contact(P5L-P6L, P5T-P6T), et provoquer l'échappement automatique du tronçon supérieur (68L, 68T) hors de l'espace délimité par les deux dents consécutives (45L, 45T) au-delà d'un angle déterminé de rotation de l'arbre de codage associé (32L, 32T).

2. Dispositif selon la revendication précédente, **caractérisé en ce que** l'axe de basculement (52L, 52T) est situé verticalement entre les tronçons inférieur (78L, 78T) et supérieur (68L, 68T) de la tige mobile de contact (70L, 70T).

3. Dispositif selon la revendication précédente, **caractérisé en ce que** la tige mobile de contact (70L, 70T) est liée en rotation à la dernière spire (64L, 64T) d'une extrémité d'un ressort à boudin (50L, 50T) de torsion, en fil métallique, d'axe horizontal (52L, 52T) dont le corps cylindrique (48L, 48T) est logé dans le boîtier dont l'autre extrémité (58L, 58T) est bloquée en rotation.

4. Dispositif selon l'une quelconque des revendications précédentes, **caractérisé en ce que** le tronçon inférieur (78L, 78T) est le tronçon d'extrémité libre inférieure de la tige mobile de contact (70L, 70T).

5. Dispositif selon la revendication 4 prise en combinaison avec la revendication 3, **caractérisé en ce que** le tronçon supérieur (68L, 68T) est un tronçon coudé à 180° qui relie la tige mobile (70L, 70T) de contact à la dernière spire (64L, 64T) du ressort.

6. Dispositif selon la revendication précédente, **caractérisé en ce que** le tronçon coudé (68L, 68T) s'étend dans un plan vertical parallèle à l'axe (52L, 52T) du ressort à boudin (50L, 50T) et sensiblement tangent à la périphérie du corps (48L, 48T) du ressort.

7. Dispositif selon la revendication précédente, **caractérisé en ce que** l'axe (52L, 52T) du ressort (50L, 50T) est décalé transversalement par rapport à l'axe (40L, 40T) de l'arbre de codage associé (32L, 32T).

8. Dispositif selon l'une quelconque des revendications 5 à 7, **caractérisé en ce que** la tige de contact (70L, 70T) est réalisée en une seule pièce avec le ressort à boudin (50L, 50T).

9. Dispositif selon l'une quelconque des revendications 2 à 8, **caractérisé en ce que** le boîtier (22) comporte une partie inférieure (24), ouverte verticalement vers le haut, dans le fond (72, 74) de laquelle sont agencés les plots fixes de contact (P5L-P6L, P5T-P6T) et qui comporte des logements ouverts vers le haut, qui logent des tronçons (38L, 38T) de chaque arbre de codage (32L, 32T) pour son montage à rotation dans le boîtier, et des logements, de forme globalement semi-cylindrique (46L, 46T), qui logent le corps cylindrique (48L, 48T) de chaque ressort à boudin (50L, 50T).

10. Dispositif selon l'une quelconque des revendications précédentes, **caractérisé en ce qu'**il comporte un commutateur électrique (94, P2), notamment de validation d'une position du curseur sur l'écran, du type comportant au moins deux plots de contact fixes (P2) agencés dans le fond (72, 74) du boîtier et un organe de déclenchement (94) de forme générale bombée qui est déformable élastiquement, à partir d'une position de repos, sous l'action d'un effort d'orientation verticale appliqué à la boule (30), pour établir une liaison électrique entre les deux plots de contact fixes.

11. Dispositif selon la revendication précédente, **caractérisé en ce que** l'organe de déclenchement (94) comporte une partie centrale (98) qui délimite une cavité en forme de calotte sphérique creuse qui reçoit directement une partie de la boule de commande (30).

12. Dispositif selon la revendication précédente, **caractérisé en ce que** les plots de contact fixes (P2L, P2T) du commutateur électrique et les plots fixes de contact (P5L-P6L, P5T-P6T) des générateurs de signaux sont des plots conducteurs (Pi) de contact appartenant à la face supérieure d'une extrémité (120) d'un câble plat (29) reçu dans le fond (72, 74) de la partie inférieure (24) du boîtier.

13. Dispositif selon la revendication précédente, prise en combinaison avec la revendication 3, **caractérisé en ce le** ressort est un ressort à boudin et en ce que la première spire (58L, 58T) du ressort à boudin se prolonge verticalement vers le bas par un brin (58L, 58T) de raccordement, et en ce que la face supérieure du câble plat comporte un plot de contact fixe supplémentaire (P4L, P4T) avec lequel lesdits brins de raccordement (58L, 58T) sont en contact électrique.

14. Dispositif selon la revendication 11, **caractérisé en ce que** le centre de rotation (C) de la boule de commande (30) est situé en dessous du plan qui contient les axes (40L, 40T) de rotation des arbres de codage (32L, 32T).

15. Dispositif selon l'une quelconque des revendications précédentes, **caractérisé en ce que** chaque arbre de codage (32L, 32T) est entraîné en rotation par la boule (30) par friction.

16. Dispositif selon la revendication précédente, prise en combinaison avec la revendication 14, **caractérisé en ce que,** au repos, l'organe de déclenchement (94) sollicite élastiquement la boule de commande (30) vers le haut en contact avec les arbres de codage (32L, 32T) et en appui sur une butée franche (130) décalée vers le haut par rapport au centre (C) de la boule de commande (30).

17. Dispositif selon l'une quelconque des revendications précédentes, **caractérisé en ce que** des moyens (118) sont prévus pour illuminer la boule de commande (30).

18. Dispositif selon la revendication 17, **caractérisé en ce que** les moyens d'illumination (118) comprennent au moins une source de lumière agencée dans le corps (22, 24) du dispositif pour illuminer directement ou indirectement la surface (31) de la boule de commande.

19. Dispositif selon la revendication 18, **caractérisé en ce que** le boîtier (22) comprend une partie inférieure (24), ouverte verticalement vers le haut, dans le fond (72, 74) de laquelle sont agencés les plots de contact fixe (P5L-P6L, P5T-P6T) et dans le fond de laquelle est agencée au moins une source de lumière (118).

20. Dispositif selon la revendication 12, **caractérisé en ce que** ledit organe de déclenchement (94) comprend plusieurs branches radiales (100T, 100L), et **en ce que** ladite source de lumière (118) est agencée entre deux branches radiales consécutives.

21. Dispositif selon l'une quelconque des revendications 18 à 20, **caractérisé en ce que** lesdits moyens d'illumination (118) comportent au moins une diode (118) émettant une lumière de couleur.

22. Dispositif selon l'une quelconque des revendications précédentes, **caractérisé en ce qu'**il comporte des moyens (156) d'essuyage la surface (31) de la boule de commande (30).

23. Dispositif selon la revendication précédente, **caractérisé en ce que** lesdits moyens d'essuyage comprennent une rondelle d'essuyage (160), insérée dans une cavité d'une partie supérieure (26) du dispositif, qui coopère de façon permanente avec la surface (31) de la boule de commande (30).

24. Dispositif selon la revendication 22 ou 23, **caractérisé en ce que** les moyens d'essuyage sont des moyens jetables.

25. Dispositif selon l'une quelconque des revendications précédentes, **caractérisé en ce que** la surface externe (31) de la boule de commande (30) est en un matériau ayant une tension de surface qui est inférieure à une valeur prédéterminée.

26. Dispositif selon la revendication précédente, **caractérisé en ce que** la tension de surface est inférieure à 32 milliNewton par mètre (32mN/m).
